# EUROPÄISCHE PATENTSCHRIFT

(11) **EP 1 053 438 B1**
(45) Veröffentlichungstag und Bekanntmachung des Hinweises auf die Patenterteilung: **24.07.2002**
(21) Anmeldenummer: 99908841.2
(22) Anmeldetag: 03.02.1999
(51) Int. Cl.: F25B 25/02, F25B 27/02, F02G 5/04, F01K 23/06

(54) **VERFAHREN UND VORRICHTUNG FÜR WÄRMETRANSFORMATION ZUR ERZEUGUNG VON HEIZMEDIEN**
METHOD AND APPARATUS FOR HEAT TRANSFORMATION FOR GENERATING HEATING MEDIA
PROCEDE ET APPAREIL DE TRANSFORMATION DE CHALEUR POUR LA PRODUCTION DE MILIEUX CHAUDS

(30) Priorität: 03.02.1998 DE 19804105
(43) Veröffentlichungstag der Anmeldung: 22.11.2000
(73) Patentinhaber: Miturbo Umwelttechnik GmbH & Co. KG, 20249 Hamburg (DE)
(72) Erfinder: MIETH, Hans, Otto, D-20249 Hamburg (DE); THOMSEN, Peter, N., D-25451 Quickborn (DE); GÜNTHER, Marcus, D-23879 Mölln (DE)
(86) Internationale Anmeldenummer: EP9900717
(87) Internationale Veröffentlichungsnummer: WO9940379

(56) Entgegenhaltungen:
- EP-A- 0 020 146
- EP-A- 0 033 849
- DE-A- 3 124 007
- US-A- 3 805 540
- US-A- 4 178 772
- US-A- 4 803 958
- US-A- 4 932 365

## Beschreibung

Die Erfindung betrifft ein Verfahren der Wärmetransformation zur Wandlung der Niedertemperatur-Abwärme aus Kühlkreisläufen von Blockheizkraftwerk(BHKW)-Verbrennungskolbenmotoren in Dampf oder sonstige Heizmedien mit betriebsnotwendiger Temperatur durch Anwendung des Prinzips der Hochtemperatur Wärmepumpe nach dem Oberbegriff des Anspruchs 1 und Vorrichtungen zur Ausführung des Verfahrens nach den Ansprüchen 17 bis 24.

Nach dem Stand der Technik ist es bekannt, Blockheizkraftwerke mit Gasturbinenoder Verbrennungs-Kolbenmotoren-Antrieb auszurüsten, deren Abwärme in Wärmetauschem ausgekoppelt und für Heizzwecke genutzt wird. Soweit diese Abwärme im Abgas anfällt, kann sie in einem Abhitzekessel zur Erzeugung von Heizmedien mit Druck und Temperatur nach betrieblicher Erfordernis genutzt werden. Die Niedertemperaturkreisläufe für die Ladeluft-, Öl- und Zylinderkühlung industrieller Verbrennungs-Kolbenmotoren wird im Normalfall auf 70 bis 80°C, bei Spezialausführungen auf 110 bis 125°C Zulauftemperatur des Kühlwassers und seine Erwärmung um 5 bis 10°C ausgelegt. Dieser Niedertemperaturanteil, der abhängig vom Brennstoff und der Konstruktion des Motors 35 bis 50 % der Abwärme ausmacht, stellt in vielen Fällen den begrenzenden Faktor für die Anwendung von Motor-BHKW's in prozeßtechnischen Industrieanlagen dar, weil er betrieblich nicht in ausreichendem Umfang nutzbar ist. Obwohl Kolbenmotoren einen besseren mechanisch/elektrischen Wirkungsgrad, ein günstigeres Teillastverhalten und wegen des geringeren Luftüberschusses einen niedrigeren Schornsteinverlust des Abhitzekessels aufweisen, werden industrielle Kraft/Wärme-Kopplungs-Anlagen überwiegend mit Gasturbinen ausgerüstet, deren gesamte, mit hoher Temperatur im Abgas anfallende, nutzbare Abwärme universell zur Beheizung der betrieblichen Prozesse eingesetzt werden kann. Da Gasturbinen erst in größeren Einheiten ein gutes Preis/Leistungs Verhältnis aufweisen und wegen ihres schlechten Teillastverhaltens auf eine hohe, gleichmäßige Wärmeabnahme angewiesen sind, ist ihr Einsatz in kleinen und mittleren Betrieben meist nicht wirtschaftlich, so daß deren ökonomisch und ökologisch durchaus interessante Kraft/Wärme-Kopplungs-Potentiale vielfach noch unausgeschöpft sind. In wenigen, ökologisch besonders engagierten Industriebetrieben trotz der aufgezeigten Problematik eingesetzte Motor-BHKWS sind überwiegend so geschaltet, daß die Niedertemperaturabwärme soweit möglich zur Beheizung oder unter Zwischenschaltung von Absorptions-Kaltwassersätzen auch zur Kühlung und Klimatisierung von Gebäuden genutzt wird, wo man mit Heizwasser von 70/90 oder max. 110/125 °C auskommt. Der technische und organisatorische Aufwand für die direkte Nutzung der Niedertemperaturabwärme als zweitem Heizmedium in Teilbereichen von Gewerbe- und Industriebetrieben ist allerdings so erheblich und die Synchronisation von Anfall und Verbrauch der unterschiedlichen Wärmeenergieträger ist so schwierig, daß trotz sorgfältiger Betriebsführung relativ häufig im übergeordneten Interesse der Deckung des Dampf- und Strombedarfes die "Notkühlung" des Motors eingeschaltet und auf die Nutzung der "geringerwertigen" Niedertemperatur-Abwärme verzichtet werden muß.

Angesichts der aufgezeigten Problematik gibt es einerseits von Seiten einiger Motorenhersteller Anstrengungen, die zulässigen Kühlwasserzulauftemperaturen in den Bereich von 110 bis 125°C zu treiben, andererseits haben bereits eine Vielzahl von Autoren über Forschungen und Versuche berichtet, die Niedertemperaturabwärme mit Hilfe von Hochtemperaturwärmepumpen mit mechanischer Brüdenverdichtung oder Wärmetransformatoren nach dem Prinzip der Absorptionstechnik auf ein betrieblich nutzbares Temperaturniveau zu heben. Über Einzelanwendungen ist man dabei jedoch nur auf wenigen Gebieten hinausgekommen, deren gemeinsamer Nenner ein relativ geringer Temperaturhub ist, weil für Druckdifferenzen von max. 1 bar einfache, nicht allzu kostspielige, ölfreie Verdichter verfügbar sind und das Verhältnis zwischen rekuperierter und zum Antrieb erforderlicher Energie (Heizzahl, Wirkungsgrad) wirtschaftlich attraktiv ist.

Solche Anwendungen finden sich z.B. an den "Würzepfannen" in Brauereien, wo große Mengen Wasser bei oder wenig über Umgebungsdruck verdampft, mit meist mechanischen, gelegentlich auch Dampfstrahl-Brüdenverdichtern um ca. 0.5 bar verdichtet und in sehr groß dimensionierten Wärmeaustauschem sofort und auf kürzestem Wege zum Beheizen eben der Würzepfanne wiederverwendet werden, aus der sie Augenblicke zuvor ausgedampft wurden. Darüber berichtet W. STRUCK in seinem Artikel "Möglichkeiten und Grenzen von Hochtemperatur-Wärmepumpen", erschienen in Band VII der Reihe "Wärmepumpentechnologie" im Vulkan Verlag, Essen; schon 1981 und beziffert darin den Primärenergienutzungsgrad der von einem Gasmotor angetriebenen Anlage mit dem beträchtlichen Faktor 5,3. Der gleichen Quelle ist auch die Beschreibung eines BHKWs mit Rückkühlung des Motorkühlwassers auf 75°C durch Teilverdampfung beim Sättigungsdruck von 0,4 bar und Brüdenverdichtung auf 2,7 bar entsprechend einer Heizmediums-(in diesem Fall Dampf-)Temperatur von 130°C zu entnehmen. Solche Anlagen, die dem Gegenstand der vorliegenden Schutzrechts-Anmeldung schon recht nahekommen, haben sich allerdings in der Praxis nicht durchgesetzt, weil die Relation der einzusetzenden mechanischen zur rekuperierbaren thermischen Energie weder ökologisch noch ökonomisch stimmt und der einerseits - und das auch noch mit Unterdruck - zum Motorkühlkreislauf und andererseits zu den Heizkreisläufen des Betriebes offene Wasser/Dampf-Bereich der Anlagen gravierende Abdichtungs- und Wartungs-Probleme aufwirft.

Aus der **US 4 803 958** ist ein Verfahren zum "Pumpen" der Abwärme aus dem Kühlkreislauf eines Verbrennungsmotors in Dampf höherer Temperatur mittels einer durch den Wärmeinhalt der Abgase des Verbrennungsmotors angetriebenen Hochtemperatur-Wärmepumpe bekannt, wobei das dem Kühlkreislauf entnommene Arbeitsmittel (Wasser) direkt verdampft wird. Die Wärmepumpe ist in dieser Anwendung als Absorptionswärmepumpe ausgebildet und bewirkt die Verdichtung der Arbeitsmittelbrüden durch Absorption in einem Absorber, Pumpen der Lösung auf den Desorberdruck und Desorption in einem Desorber mittels des Wärmeinhaltes der Abgase des Verbrennungsmotors.

Ausgehend vom aufgezeigten Stand der Technik liegt der vorliegenden Erfindung die Aufgabe zugrunde, ein Wärmetransformations-Verfahren und Vorrichtungen zum Ausführen des Verfahrens nach dem Prinzip der Hochtemperatur Wärmepumpe zu schaffen, mittels derer technisch zuverlässig und mit einer wirtschaftlichen Relation des Investitions- und Betriebs-Aufwandes zum Ertrag aus der rekuperierten Energie bei Kolbenmotor-BHKW's die Abwärme nicht nur des heißen Abgases, sondern auch eines möglichst großen Anteils der Niedertemperatur- Abwärme aus den Kühlkreisläufen für Zylinder, Schmieröl und Ladeluft/ Brennstoff-Gemisch bis zu einer projektweise zu fixierenden Temperaturuntergrenze durch Wandlung in das betriebsübliche Heizmedium zur Wärmeversorgung gewerblicher und industrieller Anlagen genutzt werden kann.

Der Forderung technischer Zuverlässigkeit dienen insbesondere die Verfahren und Vorrichtungen nach den Lehren der Ansprüche 3, 5, 6 und 7, indem mit hohen Betriebs- und Wartungs- und Instandhaltungs-Risiken behaftete Auslegungen wie z.B.

Unterdruck im Niederdruckbereich des Wärmetransformators oder direkte Einspeisung des Motorkühlwassers in das betriebliche Heizmedium vermieden werden.

Eine wirtschaftliche Relation des Investitions- und Betriebs-Aufwandes zu Ausbeute und Ertrag des Warmetransformators wird erfindungsgemäß dadurch angestrebt, daß
- nach den Lehren der Ansprüche 3 und 7 bis 13 die im Niedertemperaturbereich anfallende Abwärme so aufbereitet und selektiert wird, daß ihre Rekuperation im größtmöglichen Umfang (Wärmemenge) und der bestmöglichen Qualität (Temperatur) erfolgen kann, mit dem Ziel, ohne oder unter möglichst geringer Inanspruchnahme des mechanisch/elektrischen einen optimalen thermischen Wirkungsgrad zu erreichen.
- nach der Lehre des Anspruchs 12 durch weitestgehende Verwertung der Niedertemperaturabwärme im unaufbereiteten Zustand ihres Anfalls der Energiebedarf der Brüdenverdichtung minimiert wird, und
- nach den Lehren der Ansprüche 1 und 14 bis 23 die Energie zur Wärmetransformation der Niedertemperaturabwärme im verfügbaren Umfang aus der höherwertigen Motorabwärme bereitgestellt bzw. zumindest die Inanspruchnahme hochwertiger mechanischer und/oder elektrischer Energie zur Brüdenverdichtung und die damit verbundene Reduzierung des mechanisch/elektrischen BHKW-Wirkungsgrades vermieden wird.

Es ergeben sich folgende wesentlichen Vorteile der Erfindung:
1. Verbrennungkolbenmotor-BHKW's mit ihrem den Gasturbinen-BHKW's überlegenen mechanisch/elektrischen Wirkungsgrad und ihrem günstigeren Teillastverhalten können bei Installation des vorgeschlagenen Wärmetransformators auch in solchen Betrieben unter permanenter und vollständiger Abwärmenutzung zur Kraft/ Wärme-Kopplung eingesetzt werden, die keinen ausreichenden (d.h. ihrem Strom- und Dampf-, bzw. allgemein ausgedrückt, ihrem Hochtemperatur-Heizmediums- Verbrauch äquivalenten und zeitsynchronen) Bedarf für die in den BHKW-Kühlkreisläufen anfallende Niedertemperatur-Abwärme aufweisen.
2. Der nach den vorgeschlagenen Verfahren und Vorrichtungen ganz oder teilweise durch Nutzung der Exergie des Motorabgases erfolgende Antrieb des Wärmetransformators führt dazu, daß der mechanisch/elektrische Wirkungsgrad einer Kraft/Wärmekopplungs-Anlage gar nicht oder erheblich weniger geschmälert wird, als beim Einsatz elektrisch oder mechanisch angetriebener Hochtemperatur-Wärmepumpen nach bekannten Verfahren und Vorrichtungen.
3. Die durch Maßnahmen zur Vermeidung von Unterdruck in der Hochtemperatur-Wärmepumpe und dem betrieblichen Heizsystem bewirkte Absicherung gegen das Eindringen von Luft- und/oder Öl durch Leckagen im Niedertemperaturbereich von den Motorkühlkreisläufen bis zum Brüdenverdichter des Wärmetransformators beheben die gravierenden verfahrens- und konstruktionsbedingten Zuverlässigkeitsmängel bisher bekannter Hochtemperatur-Wärmepumpen-BHKWs nach dem Stand der Technik.
4. Die technischen Vorteile des Verbrennungs-Kolbenmotor-BHKW's mit dem vorgeschlagenen Wärmetransformator machen den Einsatz der ökologisch erstrebenswerten Kraft/Wärme-Kopplung in einer Vielzahl vor allem kleiner und mittelgroßer gewerblicher und industrieller Betriebe ökonomisch sinnvoll, deren Heizwärmebedarf für Gasturbinen-BHKW's zu niedrig und/oder zu ungleichförmig ist und die neben ihrem Dampfbedarf für die Niedertemperatur-Abwärme üblicher Kolbenmotor-BHKW's keine ausreichende und zeitsynchrone Verwendung haben.

**Ausgestaltungen der Erfindung betreffen unter anderem**
**1. ein Verfahren der Niedertemperatur-Wärme-Rekuperation,** das es ermöglicht, aus einem möglichst großen Anteil der BHKW-Motorkühlkreisläufe die Abwärme bei einer so weit über dem Siedepunkt des Wärmetransformator-Arbeitsmittels liegenden Temperatur zu gewinnen, daß dabei an keiner Stelle der Brüdenverdampfung und -verdichtung der Umgebungsdruck unterschritten wird. Damit ist sichergestellt, daß Leckagen durch Medienaustritt ins Freie angezeigt und Einsaugen von Luft oder Öl in das Arbeitsmittel unterbunden werden und daß ein für den Kraftbedarf der Brüdenverdichtung vorteilhafter, hoher Ansaugdruck und ein für den Bauaufwand des Verdichters günstiges, geringes Ansaugvolumen des Arbeitsmitteldampfes erreicht sowie die aufwendige Abdichtung gegen Unterdruck vermieden werden.
2. **ein Verfahren der Brüdenverdichtung und der Heizwärmebereitstellung im Hochdruckbereich des Wärmetransformators nach den Kriterien des Absatzes 1** dergestalt, daß die zur Brüdenverdichtung vom Sättigungsdruck der Niedertemperaturwärme-Rekuperation auf den Sättigungsdruck des betrieblichen Heizmediums erforderliche Energie soweit als möglich aus dem Wärmeinhalt des Motorabgases gewonnen wird, indem dieser in überhitzten Hochdruck-Treibdampf gewandelt und unter Abgabe der Verdichtungsarbeit auf den Druck des betrieblichen Heizmediums expandiert oder zum Antrieb einer Heißluft-Kraftmaschine nach dem Stirling Prinzip genutzt wird.

Ausführungsbeispiele der Vorrichtung zur Durchführung des Verfahrens gemäß der Erfindung sind in der Zeichnung dargestellt und werden nachfolgend beschrieben. Es zeigen
- **Abb.1**: in schematischer Darstellung ein Motor-BHVVK in Verbindung mit einer ersten Ausführungsform eines Wärmetransformators gemäß der Erfindung;
- **Abb. 2.1**: in schematischer Darstellung ein Motor-BHWK mit einem durch einen Dampfstrahlverdichter gegenüber Abb. 1 abgewandelten Wärmetransformator;
- **Abb. 2.2**: in schematischer Darstellung ein Motor-BHWK gemäß Abb. 1 mit einem Wärmetransformator, dessen mechanischer Verdichter durch eine Dampfexpansions-Kraftmaschine mit zusätzlichem Verbrennungsmotor angetrieben wird;
- **Abb. 2.3**: in schematischer Darstellung ein Motor-BHWK gemäß Abb. 1 mit einem Wärmetransformator, dessen mechanischer Verdichter von einem Elektromotor angetrieben wird, der mit Strom aus einem Generator der Dampfexpansions-Kraftmaschine versorgt wird;
- **Abb. 3.1**: in schematischer Darstellung ein Motor-BHWK in Verbindung mit einem dahingehend abgewandelten Wärmetransformator, daß dieser mit einem niedrigsiedenden Wärmepumpen-Arbeitsmittel beschickt wird;
- **Abb. 3.2**: in schematischer Darstellung eine gegenüber Abb. 3.1 im Bereich eines Heizwärme-Mitteldruckkessels abgewandelte Ausführungsform des Wärmetransformators;
- **Abb. 4.1**: in schematischer Darstellung ein Motor-BHWK in Verbindung mit einem Wärmetransformator, der einen Stirlingmotor zum Antrieb des Brüdenverdichters aufweist und
- **Abb. 4.2**: ebenfalls in schematischer Darstellung eine Vorrichtung gemäß Abb. 4.1, bei der zum Betrieb des Wärmetransformators ein niedrigsiedendes Wärmepumpen-Arbeitsmittel eingesetzt wird.

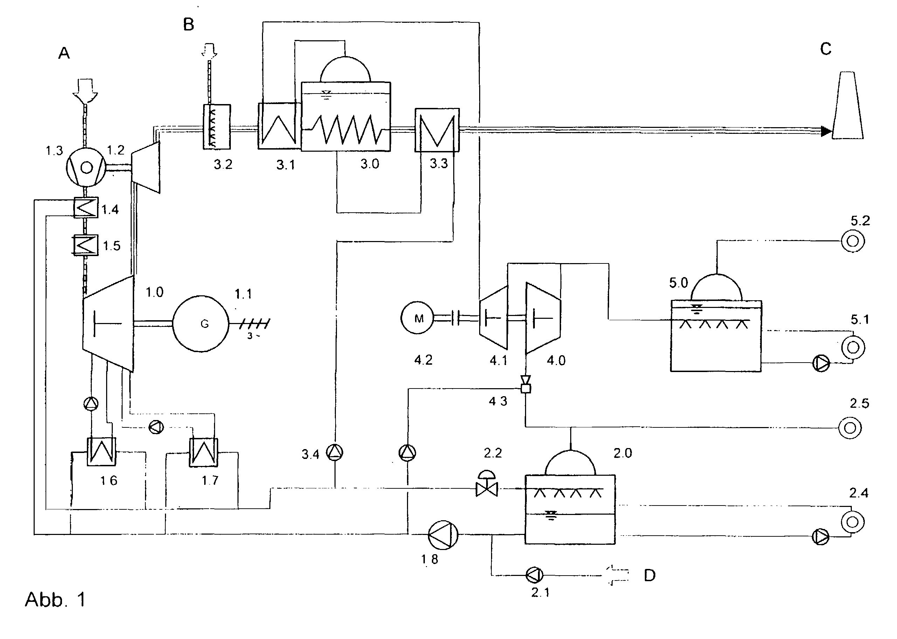

Die Vorrichtungen gliedern sich nach **Abb. 1** in einen BHKW-Motor 1.0 mit seinen Nebenaggregaten 1.1 bis 1.8, einen Niederdruckkessel und Brüdenverdampfer 2.0 bis 2.5, einen Abhitze-Treibdampf-Hochdruckkessel 3.0 bis 3.4, einen Brüdenverdichter mit Antrieb 4.0 bis 4.2 und einen Mitteldruckheizkessel 5.0 bis 5.2.

Bevor darauf im Detail eingegangen wird, folgen anhand Abb.1 zunächst Kurzbeschreibungen der Systeme nach dem Stande der Technik zur Verdeutlichung der Neuerungen und Verbesserungen nach den Lehren der Erfindung.

**Ein Standard-BHKW der für Gebäudeheizung gebräuchlichen Bauart** besteht nur aus Baugruppen ähnlich 1 und 2 der Abb 1, so geschaltet, daß das Abgas des BHKW-Motörs 1.0 hinter einem Abgasturbolader 1.2/1.3 durch einen Abhitzekessel 2.0 geführt ist, in dem das vorgewärmte Kühlwasser aus den bei solchen Anlagen meist hintereinandergeschalteten Niedertemperatur-Motorkühlkreisläufen 1.4 und 1.5 (Hoch- und Niedertemperaturstufe des Kühlers für das vom Abgasturbolader 1.2/1.3 aufgeladene Brennstoff/Luft- Gemisch (A); Motorölkühlung 1.6 und Zylinderkühlung 1.7) auf die Vorlauftemperatur des oder der Heizkreise/s 2.4 nachgeheizt wird. Da die Temperaturen im allgemeinen 80°C nicht übersteigen, werden in solchen BHKWs hohe Abwärmenutzungsgrade erreicht, die nur wegen des bei sogenannten Mager(turbo)motoren erforderlichen Luftüberschusses von 1.5 bis 2.0 unter dem thermischen Wirkungsgrad guter Heizkessel liegen. Dieser Nachteil kann beim Einsatz von "lambda 1"-Motoren mit geregeltem Kataysator vermieden werden, die aber wegen der geringeren spezifischen Leistung teurer sind als Magermotoren mit Abgasturbolader. Hier sind Ökonomie und Ökologie noch in einem wegen der derzeitigen Strom-/Wärmepreisrelation leider meist zu ungunsten der letzteren entschiedenen Widerstreit.

**Übliche Motor- BHKWs für industrielle oder gewerbliche Anwendung** bestehen aus Baugruppen ähnlich 1, 2, und 5 der Abb.1, so geschaltet, daß der auf einen Überdruck entsprechend der Temperatur des betrieblichen Heizmediums ausgelegte Heizkessel 5.0 allein vom Abgas beheizt und die Nutzung des in einem Behälter entsprechend Kessel 2.0 gesammelten Kühlwassers entweder separat geregelt oder die Abwärme mangels Bedarf für Heizwärme dieser Temperaturstufe zwecks Kühlwasserrückkühlung "über Dach gefahren" wird. Bei 35 bis 40% elektrischem Motorwirkungsgrad und jeweils ca. 20% Nutzwärmeanfall im Abgas und im Kühlwasser liegt bei Verzicht auf die Niedertemperaturabwärme der Gesamtnutzungsgrad bei mageren 60% der eingesetzten Brennstoffenergie, also hart an der Grenze der steuerlichen Anerkennung als Kraft/Wärme-Kopplungsanlage.

**BHKW-Anlagen mit Hochtemperaturwärmepumpe zur Rückgewinnung der Kühl wasserwärme durch Brüdenverdichtung nach dem Stand der Technik** erreichen zwar einen besseren thermischen Nutzungsgrad nahe 40%, müssen aber für den Antrieb des Verdichters soviel Antriebsenergie aufwenden, daß z.B. im Falle der von STRUCK beschriebenen Anordnung der elektrische Wirkungsgrad des BHKWs um ca. 5 auf 30 bis 35% sinkt. Die Schaltung nach STRUCK stellt sich bezüglich des BHKW-Motors 1.0 und seiner Kühlkreisläufe 1.4 bis 1.7 sowie des Niederdruckkessels 2.0, des Brüdenverdichters 4.0 mit seinem Antriebsmotor 4.2 und auch des Mitteldruck-Heizkessels 5.0 bis 5.2 ähnlich Abb.1 dar, doch entfallen der Treibdampf Hochdruckkessel 3.0 bis 3.3 und die Dampfkraftmaschine 4.1; und das Abgas wird durch den Heizkessel 5.0 geführt. Ein weiterer wichtiger Unterschied zum erfindungsgemäßen System besteht darin, daß es wegen des fehlenden Wärmetauschers 1.7 und durch den Unterdruck von 0,4 bar im Niederdruckkessel 2.0 und dem direkt angeschlossenen Motor bei Leckagen zum Einsaugen von Öl und Luft in die Hochtemperatur-Wärmepumpe und den betrieblichen Heizkreislauf kommt, was zu erheblichen Vorbehalten gegen den Einsatz solcher Systeme Anlaß gibt.

**BHKW- Anlagen mit Gasturbinenantrieb** bestehen wegen des Fehlens verwertbarer Niedertemperaturabwärme nur aus der Antriebsmaschine ähnlich den Baugruppen 1.0, 1.1, 1.2 und 1.3 und einem Abhitzekessel ähnlich den Baugruppen 3, ausgelegt auf den betriebserforderlichen Druck des Heizmediums und ausgerüstet mit Heizkreisen gemäß 5.1 und/oder 5.2. Der mechanisch/elektrische Wirkungsgrad moderner Industriegasturbinen steigt von 0,6 bis 3 MW von 20 auf 30% und erreicht bei 10 MW knapp 35%. Der thermische Wirkungsgrad und der einfache Anlagenaufbau sind zwar begünstigt durch das Angebot nahezu der gesamten Abwärme im Abgas, aber andererseits gemindert durch einen hohen Schornsteinverlust (bei (C)) in der Größenordnung von 20% aufgrund des hohen, derzeit noch materialtechnisch und konstruktiv bedingten Luftüberschusses von λ = 4. Durch Nachheizen im Abgasstrom gemäß Baugruppe 3.2 läßt sich zwar der Schornsteinverlust bis auf ein Drittel der angegebenen 20% mindern, doch geht dabei die Stromkennzahl der Anlage im gleichen Maße zurück. Dieses Mittel ist also nur in dem Umfang sinnvoll, in dem der Wärmebedarf des Betriebes temporär das Abwärmeangebot der Gasturbine überschreitet. Tritt dieser Zustand dauernd auf, ist das Gasturbinen-BHKW so knapp ausgelegt, daß das ökologische Abwärmenutzungs- oder Kraft/Wärme-Kopplungs-Potential des Betriebes nicht ausgeschöpft ist.

**Das erfindungsgemäße Motor-BHKW mit Wärmetransformator (Abb. 1)** ist im Gegensatz zu den beschriebenen BHKWs nach dem Stand der Technik mit allen Hauptkomponenten 1.0 bis 5.0, aber nicht notwendigerweise immer mit deren sämtlichen Unterbaugruppen ausgerüstet. Soweit es Alternativen zu dem in Abb.1 dargestellten Ausrüstungsstand gibt, werden diese im Kontext mit dem dargestellten Ausrüstungsstand beschrieben und, soweit verbal nicht eindeutig beschreibbar, mit weiteren Abbildungen belegt. Zur Vermeidung von Irritationen sei klargestellt, daß mit dem Begriff "Wärmetransformator" nicht eine bezifferbare Baugruppe der Anlage, sondern deren Gesamtheit mit Ausnahme der Baugruppe 1 bezeichnet wird. Der Begriff wurde dem der Hochtemperatur-Wärmepumpe vorgezogen, um die Integration eines gegenüber dieser erweiterten Kreises von Baugruppen zu der umfassenden Funktion des Wärmetransformators zu kennzeichnen.

### Baugruppe 1:

**Der Verbrennungs-Kolbenmotor 1.0 mit einem angekoppelten Elektrogenerator** 1.1. Dargestellt ist ein Magerturbomotor mit Abgasturbine 1.2 und einem gekoppelten Brennstoff-Luftgemisch-Turboverdichter 1.3, wie sie bei einem Gasmotor ausgeführt werden. Bei Motoren mit Flüssigbrennstoff-Einspritzung würde die Ladeturbine nur Luft verdichten, bei Saugmotoren entfällt der Abgas-Turbolader inclusive der Ladeluft- oder Gemischkühler 1.4 und 1.5. Die Aufteilung der Kühler 1.4 und 1.5 erfolgt nach Anspruch 8 so, daß im Ladeluft- oder Gemischkühler 1.4 die Kompressionswärme bis auf eine unvermeidliche Temperaturdifferenz an das von einer Pumpe 1.8 umgewälzte Kühlwasser aus einem Niederdruckkessel 2.0 übertragen wird. Der Niedertemperatur-Kühler 1.5 ist an eine externe Kühlwasser-Versorgung angeschlossen.

Bei der vorteilhaften Ausführung nach Anspruch 9 wird unter Inkaufnahme des damit verbundenen Leistungsverlustes des Motors 1.0 auf den **Kühler 1.5** verzichtet, um die dort abgeführte Wärmemenge in der Größenordnung von 5% des Brennstoff-Wärmedurchsatzes nicht "wegzukühlen", sondern in die Abgasnutzung einzubeziehen. Daraus resultiert im Kontext des Anspruchs 1 der weitere Vorteil, daß die zur Brüdenverdichtung verfügbare Abgasenergie zunimmt. Noch begünstigter werden beide Effekte, wenn ein "lambda 1"-Saugmotor eingesetzt wird, bei dem auch die Wärmemenge aus Kühler 1.4 vom Niederdruckkessel 2.0 ins Abgas verlagert und damit zugleich der Leistungsbedarf des Brüdenverdichters 4.0 gemindert und das Angebot an Antriebsleistung erhöht wird. Darüber hinaus werden durch den Verzicht auf die Motoraufladung der Luftüberschuß und damit der davon direkt abhängige Schomsteinverlust proportional gemindert und der thermische Wirkungsgrad der Anlage erhöht.

Der **Wärmetauscher 1.7** ist für den Fall vorgesehen, daß eine Medientrennung zwischen dem Arbeitsmittel des Wärmetransformators und dem Zylinderkühlkreislauf des Motors 1.0, z.B. aus Sicherheitserwägungen bezüglich der in Nahrungsmittelbetrieben besonders kritisch betrachteten Kontaminationsgefahr des Heizmediums mit Motoröl ausdrücklich gewünscht oder technisch erforderlich wird. Das könnte eintreten, wenn Anspruch 7 nicht verwirklicht werden kann, nach dem die Kühlwassertemperatur des Motors 1.0 auf 115 bis 125 °C angehoben wird, um mit dem Wärmetransformator-Arbeitsmittel Wasser zu gewährleisten, daß sich die Anlage im gesamten Niedertemperaturbereich über Umgebungsdruck befindet, und das nach Anspruch 4 in diesem Fall zu verwendende alternative Arbeitsmittel mit einem niedrigeren Siedepunkt aus chemischen oder gefahrentechnischen Gründen wie z.B. Brennbarkeit oder Korrosivität für den Einsatz als Motorkühlmittel nicht in Frage kommt.

In einem **Ölkühler 1.6** fallen wie im Kühler 1.5 etwa 5% der Abwärme an. Wenn gemäß Anspruch 7 die Kühlwasserzulauftemperatur auf 115 bis 125 °C angehoben wird, muß gemäß Anspruch 9 der Motor 1.0 so weiterentwickelt werden, daß er bei Verwendung eines entsprechenden Schmieröles mit einer Öltemperatur von ca. 120 bis 130 °C ohne Abstriche an Leistung und Lebensdauer arbeiten kann. Es gibt heute bereits Motoren, die entweder die Heißkühlung nach Anspruch 7 oder nach Anspruch 9 den Betrieb mit Öltemperaturen von 120 bis 130°C zulassen. Die Kombination beider Eigenschaften kann daher nur eine Frage des Entwicklungsaufwandes bzw. der bislang in dieser Form noch nicht geforderten Zulassung sein. Mit der Tatsache, daß die BHKW-Motoren ursprünglich nicht für die Anwendung in Kraft/Wärme-Kopplungsanlagen entwickelt und mangels einer konsequenten Gesamtbetrachtung unter Vernachlässigung und zum Teil sogar Erschwerung der Abwärmenutzbarkeit stets mit Priorität auf hohen mechanisch/elektrischen Wirkungsgrad optimiert wurden, erklärt es sich, daß nach so vielen Jahren BHKW-Bau noch so grundlegende Neuerungen mit so entscheidendem Einfluß auf deren Wirtschaftlichkeit und Ökologieeffekt möglich sind.

### Baugruppe 2:

**Der Niederdruckkessel** des Wärmetransformators besteht aus dem Behälter 2.0 mit den verfahrenstechnischen Funktionen Teilverdampfen der durch eine Pumpe 2.1 entnommenen und im Zusammenwirken mit einem Druckhalteventil 2.2 auf einem über dem Sättigungsdruck zur höchsten in den Motorkühlkreisen 1.4, 1.6 und 1.7 auftretenden Überhitzungstemperatur gehaltenen und unter Druckabbau durch das Druckhalteventil 2.2 und Verdüsung in den Niederdruckkessel 2.0 zurückgeleiteten Arbeitsmittelflüssigkeit sowie Restflüssigkeitsausscheidung aus dem entstehenden Arbeitsmittelbrüden vor dem Eintritt in eine Ansaugleitung des Brüdenverdichters 4.0. Außerdem dient der Niederdruckkessel 2.0 als Sammler und niveaugeregelte Vorlage der BHKW-Anlage für Speisewasser und Kondensat aus einem externen betrieblichen Speicher und als Dampf- und Heizwasser-Versorgung für betriebliche Niedertemperaturverbraucher 2.4 und 2.5.

### Baugruppe 3:

**Der Hochdruckkessel** des Wärmetransformators für Treibdampf besteht aus einem Abhitze-Dampferzeuger 3.0 mit einem abgasseitig vorgeschalteten Überhitzer 3.1 und dem nachgeschalteten Economiser (Speisewasservorwärmer) 3.3 mit einer vom Füllstand des Dampferzeugers 3.0 geregelten Speisepumpe 3.4. Die Auslegung des Dampferzeugers 3.0 und seiner Nebenaggregate 3.1 bis 3.4 erfolgt erstens in Abhängigkeit der Abgastemperatur des Motors 1.0, zweitens der Qualität und Quantität der Niedertemperaturabwärme, drittens des betriebsspezifischen Heizwärmedruckes und viertens des aus diesen Daten resultierenden Leistungsbedarfes der Brüdenverdichtung und ihres Antriebes. Ergeben diese Vorgaben ein Defizit des Wärmeenergieangebotes im Motorabgas gegenüber dem Leistungsbedarf der Brüdenverdichtung, so besteht eine u.U. vorteilhafte Maßnahme in der Installation eines Zusatzbrenners 3.2 im Abgasstrom vom Motor 1.0 zum Treibdampfkessel 3.0 nach Anspruch 2. Alternativen dazu werden im Zusammenhang mit der Brüdenverdichtung dargestellt und im Kontext der Optimierung des Wärmetransformators diskutiert.

### Baugruppe 4:

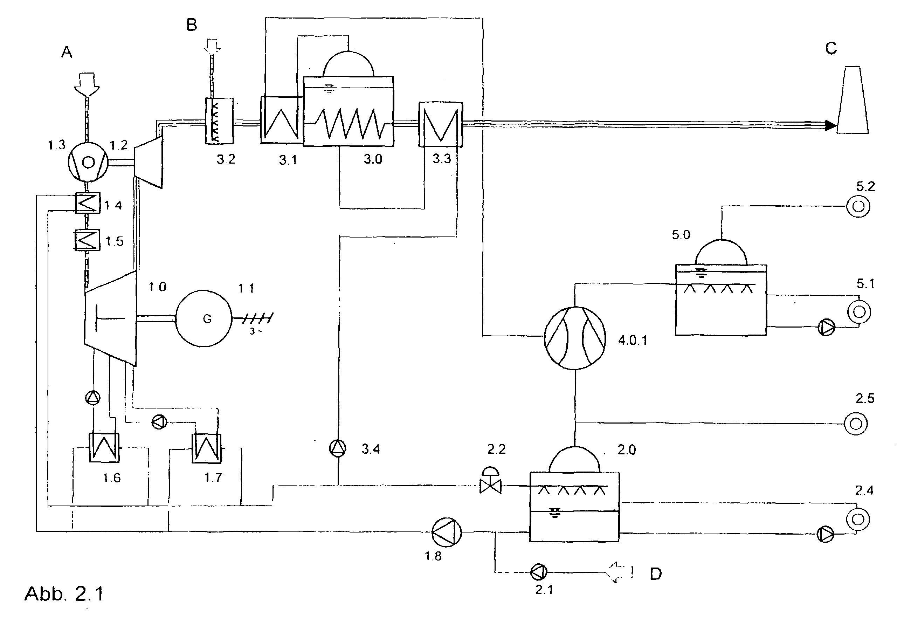

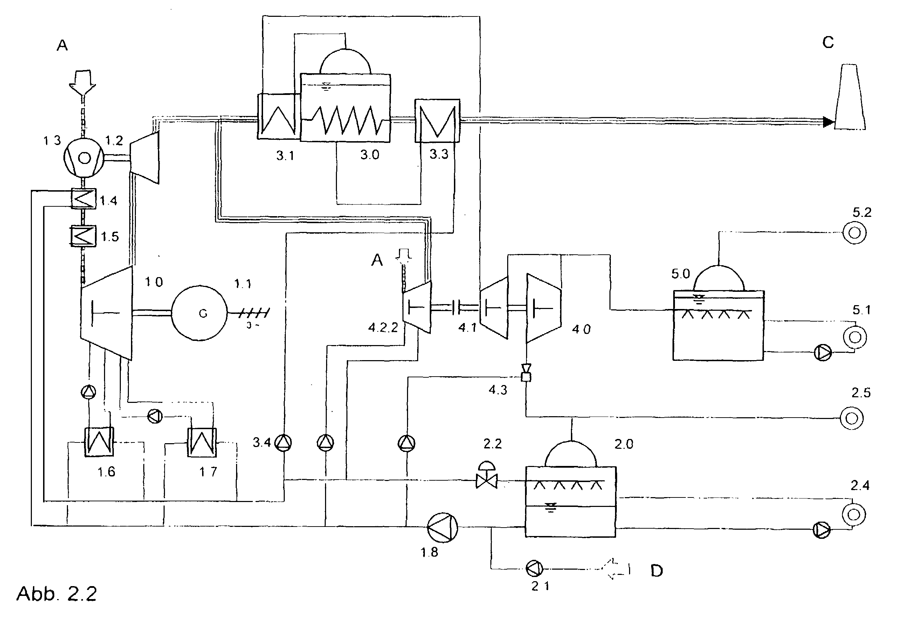

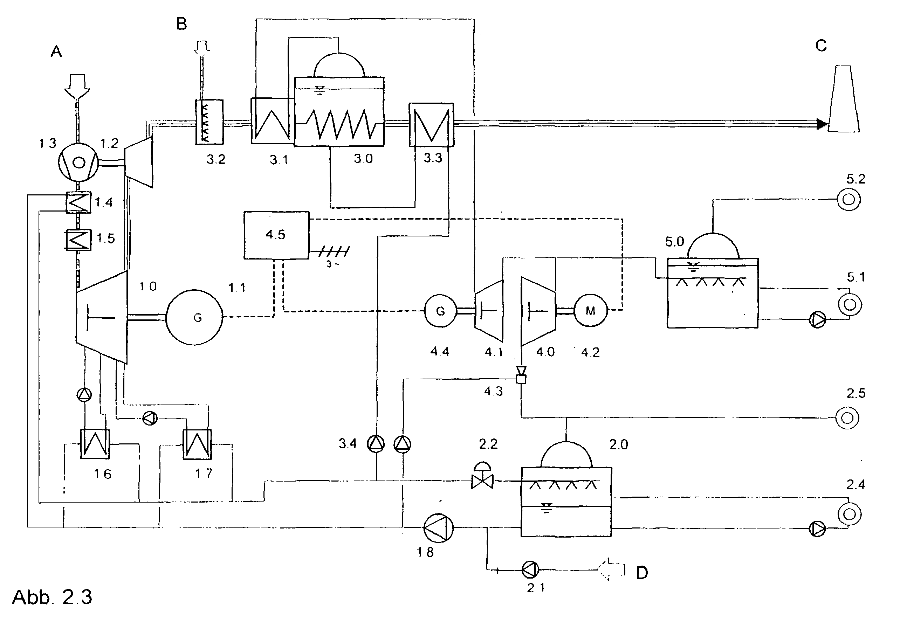

**Die Brüdenverdichtungsanlage** des Wärmetransformators, besteht nach Abb.1 aus einem mechanischen Verdichter 4.0, gekoppelt an eine Dampfexpansions-Kraftmaschine 4.1 und einen Zusatzantrieb 4.2. Diese Konfiguration stellt in sich eine in der Praxis nicht sinnvolle Kombination aus Lösungsansätzen nach den Ansprüchen 1, 2, 20, 22 und 17 dar. Soweit sich die realen Anordnungen durch einfaches Weglassen von Baugruppen in Abb. 1 eindeutig beschreiben und diskutieren lassen, wird das anschließend getan. Stark abweichende Baugruppenkonfigurationen sind in den Abb. 2.1 bis 2.3 dargestellt.

**Die Abb. 2.1 zeigt einen Wärmetransformator mit Dampfstrahlverdichter 4.0.1,** bestehend aus der Hochdruckkesselanlage 3.0, 3.1, 3.3 mit Zusatzbrenner für Treibdampf 3.2 gemäß Anspruch 2 und dem Dampfstrahlverdichter 4.0.1 gemäß Anspruch 17. Im Zusammenhang mit der Dampfstrahlverdichtung gibt es zur Erhöhung des Treibdampfangebotes durch den erfindungsgemäßen Zusatzbrenner 3.2 keine Alternative. Der Dampfstrahlverdichter 4.0.1 weist insbesondere bei hohem Verdichtungsverhältnis einen schlechteren Wirkungsgrad als mechanische Verdichter auf. Da er niedrige Anschaffungs- und Instandhaltungskosten hat und keinerlei Kontaminationsgefahr für den Dampf bedeutet, ist sein Einsatz dennoch stets in Betracht zu ziehen, wenn die Randbedingungen bezüglich Verdichtungs- und Mengenverhältnis der Nieder- und Hochtemperaturabwärme günstig sind. Bei der Beurteilung der Auswirkung des Zusatzbrenners 3.2 auf die Stromkennzahl des BHKWs ist zu beachten, daß besonders bei Magerturbo-Motoren mit hohem Luftüberschuß die Nachverbrennung einen günstigen Einfluß auf den Schomsteinverlust und den thermischen Wirkungsgrad der Anlage hat.

**Wärmetransformator ähnlich Ausführung gemäß Abb. 1, mit mechanischem Verdichter 4.0, angetrieben durch Dampfexpansions-Kraftmaschine 4.1 mit Energie aus Abgas und evtl. Zusatzbrenner 3.2,** bestehend aus dem Verdichter 4.0 mit der gekoppelten Dampfexpansions-Kraftmaschine 4.1, ohne mechanischen Zusatzantrieb 4.2, aber nach Anspruch 2 kombinierbar mit dem Zusatzbrenner 3.2, falls ein Defizit an Antriebsenergie vorliegt. Diese, dem Hauptanspruch 1 am nächsten kommende Ausführung bietet sich am besten an, wenn die Energieverteilung auf Hoch- und Niedertemperatur-Abwärme günstig und das Verdichtungsverhältnis durch nicht zu hohen Heizmediendruck einerseits und hohen Druck im Niederdruckkessel 2.0 andererseits mäßig sind, wie das bei Auslegung der Anlage nach den Ansprüchen 7 bis 15 in besonderem Maße der Fall ist. Damit sind auch die Voraussetzungen für den Einsatz der kostengünstigen und robusten Variante einer integrierten Expansions- und Kompressions-Kolbenmaschine ohne Kurbelwelle nach Anspruch 20 erfüllt, die nur noch aus direkt über gemeinsame Kolbenstangen gekoppelten Expansions- und Kompressionskolben in axial fluchtend angeordneten Zylindern besteht und die konstruktionsbedingt keine Möglichkeit eines zusätzlichen mechanischen Hilfsantriebes bietet.

**Wärmetransformator nach Abb. 2.2, mit mechanischem Verdichter 4.0, angetrieben durch Dampfexpansions-Kraftmaschine 4.1 mit einem zusätzlichem Verbrennungsmotor 4.2.2,** gemäß Anspruch 23 bestehend aus dem Verdichter 4.0 mit der fest gekoppelten Dampfexpansions-Kraftmaschine 4.1 und dem drehzahlabhängig gekoppelten Verbrennungsmotor 4.2.2, dessen Abwärme nach Anspruch 23 parallel zu der des BHKW Motors 1.0 von den Baugruppen 2 und 3 des Wärmetransformators rekuperiert und durch die Brüdenverdichtungsanlage 4.0 bis 4.3 dem Heizkessel 5.0 zugeführt wird. Gegenüber der Bereitstellung der zusätzlichen Antriebsenergie durch den Zusatzbrenner 3.2, der bei dieser Anordnung entfällt, hat der Verbrennungsmotor 4.2.2 den Vorteil, daß infolge seines im Vergleich zur Dampfexpansions-Kraftanlage drei- bis vierfach höheren mechanischen Wirkungsgrades entsprechend weniger Brennstoff eingesetzt werden muß, dessen Abwärmenutzung die Stromkennzahl des BHKWs negativ beeinflußt. Das gilt umso mehr, als die Abgasenergie des Verbrennungsmotors 1.0 in die Hochdruck-Treibdampf-Erzeugung einfließt, die Leistung der Dampfexpansions-Kraftmaschine 4.1 erhöht und daher zur Bemessung einer geringeren Leistung des Verbrennungsmotors 1.0 führt.

**Wärmetransformator ähnlich Abb. 1, mit mechanischem Verdichter 4.0, angetrieben durch eine Dampfexpansions-Kraftmaschine 4.1 mit mechanischem Hilfsantrieb,** gemäß Anspruch 21 bestehend aus dem Verdichter 4.0 mit der Dampfexpansions-Kraftmaschine 4.1 und einem gekoppelten Hilfsantrieb 4.2. Die direkte mechanische Kopplung an einen Nebenabtrieb des BHKW-Motors 1.0 ist hinsichtlich Bauaufwand und Wirkungsgrad interessant, wirft aber Probleme auf, wenn die Leistungsregelung des Verdichters 4.0 über die Drehzahl erfolgt. Praktikabler ist der Hilfsantrieb durch einen Hydraulikmotor 4.2, der drehzahlregelbar ist und weniger Zwänge bezüglich der räumlichen Zuordnung der Maschinen aufweist. Da der Hydraulikmotor 4.2 Leistung vom BHKW-Motor abzweigt, könnte theoretisch der Generator 1.1 kleiner ausgelegt werden, um Investitionskosten zu sparen. Realistisch ist diese Überlegung allerdings nur unter der Voraussetzung, daß mindestens der Anteil der Hilfsantriebsleistung des Brüdenverdichters 4.0, um den die Generatorleistung verringert ist, bei Vollastbetrieb des BHKWs immer hydraulisch ausgekoppelt wird. Wenn man die Möglichkeiten bedenkt, nach Anspruch 12 die Brüdenbelastung und damit den Leistungsbedarf des Verdichters 4.0 durch Direktverbrauch an Niedertemperaturwärme temporär zu mindern, rückt zumindest dieses Motiv für die Wahl eines Hydraulikantriebs in den Bereich der Theorie. Standardlösung ist natürlich ein gemäß Abb. 1 direkt angeflanschter, über Frequenzumrichter drehzahl- und leistungsgeregelter Elektromotor 4.2, dessen Wirkunsgrad und Bauaufwand im konkreten Fall 1:1 mit dem der Hydraulik verglichen werden muß. Die zur effektiven Nutzung des Rationalisierungspotentials nach Anspruch 12 erforderliche Flexibilität gewinnt man allerdings erst durch Realisierung der im folgenden beschriebenen Konfiguration nach Anspruch 22.

**Wärmetransformator nach Abb. 2.3, mit mechanischem Verdichter 4.0 mit Elektromotor 4.2, der mit Strom aus einem Generator 4.4 der Dampfexpansions-Kraftmaschine 4.1 versorgt wird,** bestehend nach Anspruch 22 aus dem mit dem Elektromotor 4.2 angetriebenen Verdichter 4.0, der nicht mehr wie nach Anspruch 21 mechanisch mit der Dampfexpansions-Kraftmaschine 4.1, sondern durch das Lastmanagement 4.5 elektrisch mit deren Stromgenerator 4.4 gekoppelt ist. Der mit Drehzahlregelung ausgerüstete Elektromotor 4.2 verbraucht von dem im Generator 4.4 erzeugten Strom nur soviel, wie zum Antrieb des Verdichters 4.0 aufgrund des Brüdenüberschusses im Niederdruckkessel 2.0 entsprechend dem Verhältnis aus dem Motor 1.0 anfallender und über die Heizkreisläufe 2.4 und 2.5 entnommener Niedertemperatur-Wärmemengen erforderlich ist Der darüber hinaus im Generator 4.4 der Dampfexpansions-Kraftmaschine 4.1 aus Abwärme erzeugte Strom erhöht den elektrischen Wirkungsgrad und die Stromkennzahl der BHKW-Anlage. Erst mit dieser vorteilhaften Anordnung nach Anspruch 22 ist es möglich, überschüssige Expansionsenergie durch temporären Direktverbrauch rekuperierter Niedertemperaturabwärme nach Anspruch 12 in zusätzlichen Kraft/Wärme-Kopplungs-Strom zu wandeln. Wenn der Hochdruckkessel 3.0 und die Dampfexpansions-Kraftmaschine 4.1 mit einer Leistungsreserve ausgelegt sind, kann außerdem in Perioden hohen, das Abwärmeangebot des BHKWs übersteigenden betrieblichen Heizenergiebedarfes der Zusatzbrenner 3.2 betrieben und die Deckung des überdurchschnittlichen temporären Wärmebedarfes mit zusätzlicher Stromerzeugung verbunden werden. Unter Betrachtung der speziellen Gegebenheiten des Einsatzfalles einer BHKW-Anlage kann es daher entsprechend der Formulierung des Anspruchs 22 sinnvoll sein, den Elektroantrieb des von der Dampfexpansions-Kraftmaschine 4.1 mechanisch entkoppelten Brüdenverdichters 4.0 mit der Installation des Zusatzbrenners 3.2 nach Anspruch 2 zu kombinieren.

### Baugruppe 5:

**Der Heizwärme-Mitteldruckkessel** des Wärmetransformators besteht aus dem auf den Sättigungsdruck der betrieblichen Heizmedien ausgelegten Kessel 5.0, der nicht notwendigerweise mit Abgasheizflächen ausgerüstet sein muß, da er durch die Einleitung des im Brüdenverdichter 4.0 komprimierten Dampfes aus dem Niederdruckkessel 2.0 und des in der Dampfexpansions-Kraftmaschine 4.1 entspannten Dampfes aus dem Hochdruckkessel 3.0 gespeist wird, der kondensiert werden muß, soweit der Anfall den Verbrauch der betrieblichen Heizkreise 5.1 und 5.2 übersteigt. Der Kessel 5.0 hat die Funktion eines Abwärme-Speichers, der auf Differenzen zwischen Wärme-Anfall und Verbrauch mit Druckveränderungen reagiert, die erfindungsgemäß die zentrale Führungsgröße für die Lastregelung des BHKWs und parallel geschalteter zusätzlicher Wärmeversorgungsanlagen darstellt.

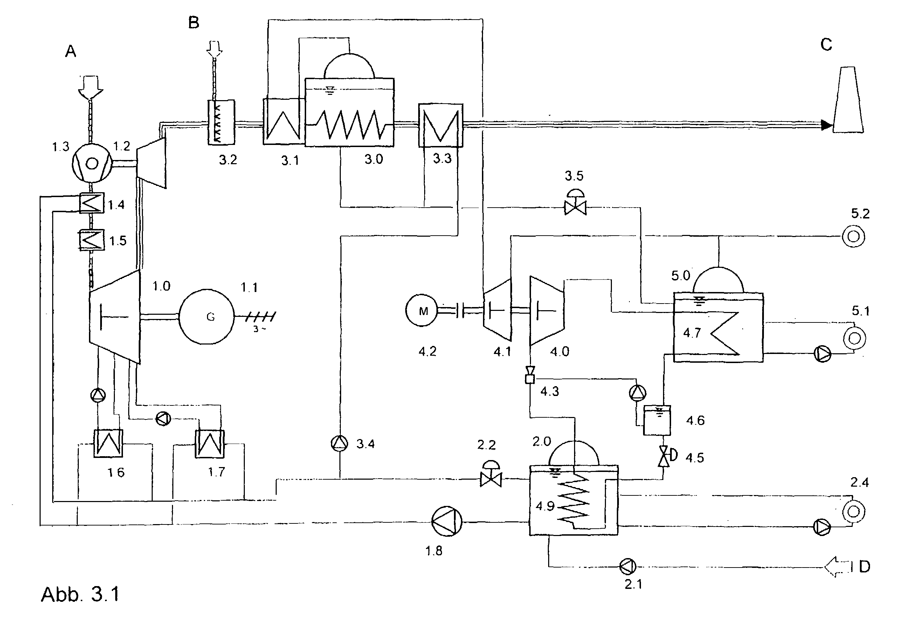

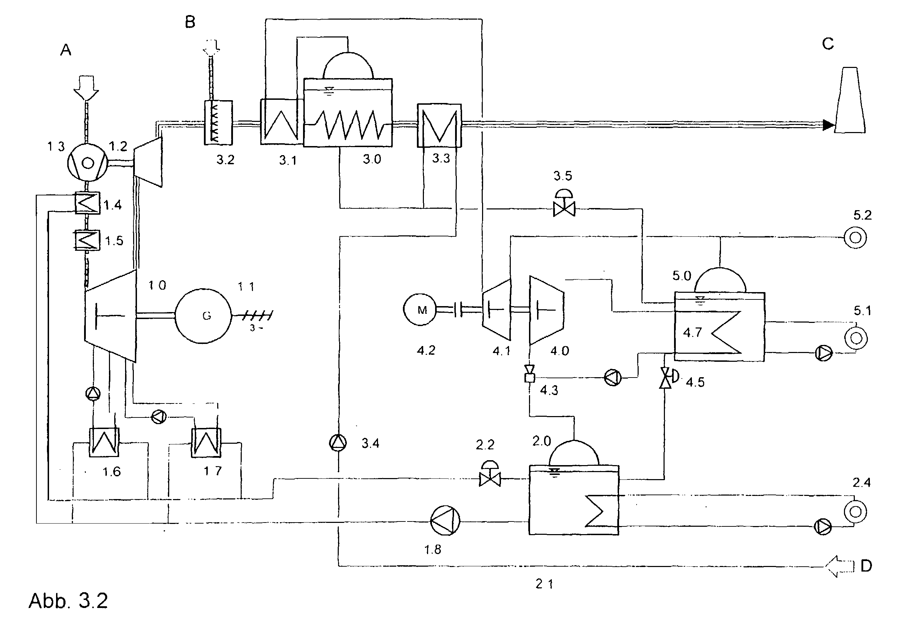

Eine Ausstattungs- und Schaltungsvariante des Kessels 5.0 gemäß **Abb. 3.1** und **Abb. 3.2** ergibt sich bei Ausführung des Wärmetransformators mit einem niedrigsiedenden Wärmepumpen-Arbeitsmittel nach den Ansprüchen 5, 6 und 19, indem er dann mit Wärmeaustauschflächen für die Kondensation des komprimierten Arbeitsmittels ausgerüstet und wegen der Heizdampferzeugung durch die zugeführte Wärme mit einer Speisewasserversorgung versorgt werden muß.

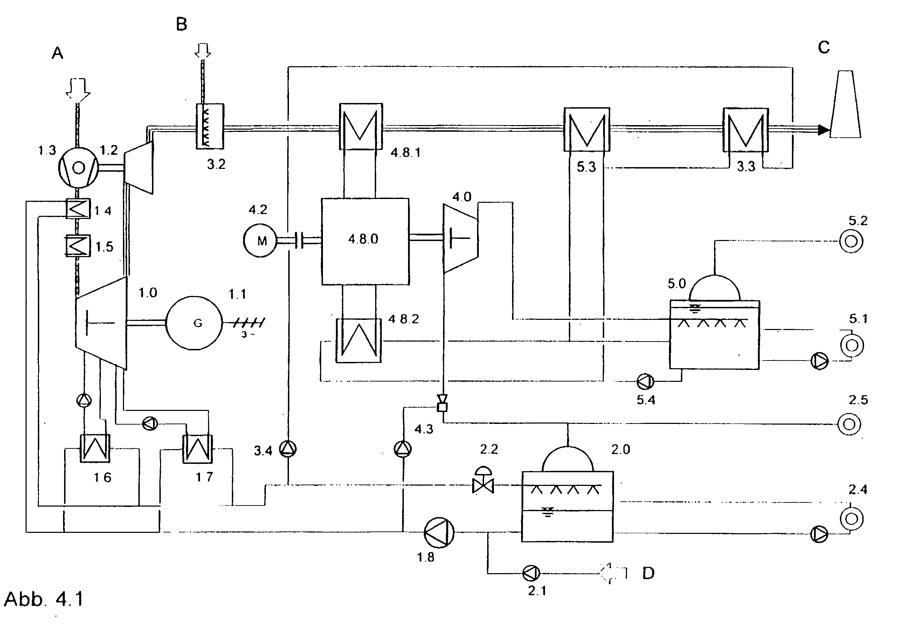

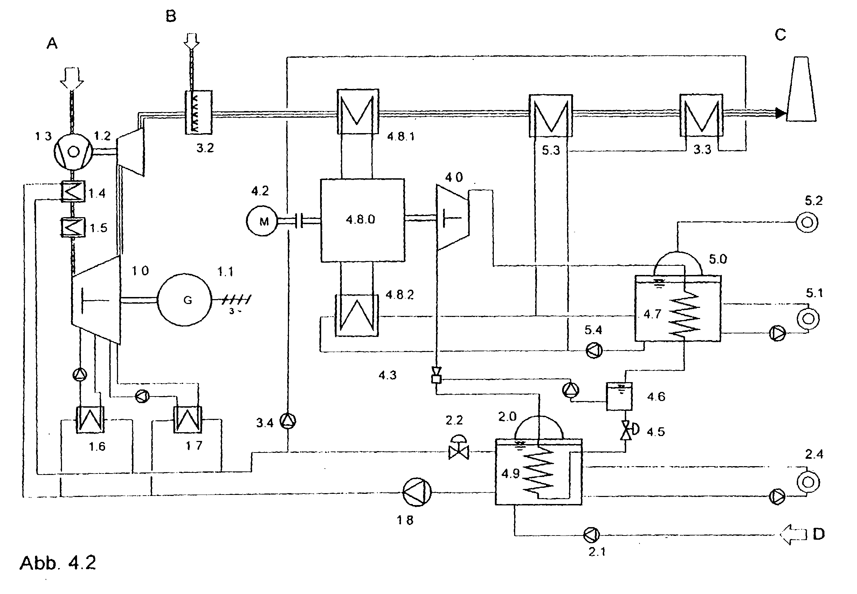

**Schaltungs- und Funktionsvarianten der Baugruppen 2, 3 und 5 nach Abb. 4.1 und Abb. 4.2 mit einem Stirlingmotor 4.8.0 zum Antrieb des Brüdenverdichters 4.0 nach Anspruch 24.** In diesem Fall werden der Hochdruckkessel 3.0 und der Überhitzer 3.1 durch einen Antriebs-Hochtemperatur-Wärmetauscher 4.8.1 des Stirlingmotors 4.8.0 ersetzt und dem nach wie vor mit der Speisepumpe 3.4 aus dem Motorkühlkreisrücklauf des Niederdruckkessels 2.0 versorgten Abgasnachkühler/Speisewasservorwärmer oder Economiser 3.3, der nun in Kessel 5.0 mündet, wird ein weiterer, durch die Zirkulationspumpe 5.4 mit Kessel 5.0 verbundener Abgasvorkühler 5.3 vorgeschaltet. Ein Hochtemperatur-Kühlkreislauf mit der Zirkulationspumpe 5.4 überführt die Abwärme des Antriebs-Niedertemperatur-Wärmetauschers 4.8.2. des Stirlingmotors 4.8.0 parallel zu der des Abgasvorkühlers 5.3 in den Mitteldruckkessel 5.0, dessen übrige Funktionen der Beschreibung im vorherigen Absatz entsprechen. Die zum Ausgleich eventueller Energiedefizite im Motorabgas für die Dampfexpansions-Kraftmaschine 4.1 dargestellten und diskutierten Lösungen nach den Verfahrens- und Vorrichtungsansprüchen 2 und 17 bis 23, gelten analog für den Stirlingmotor 4.8.0. Die Abb. 4.1 bezieht sich, wie die Abbildungen1 und 2.1 bis 2.3, auf das Wärmepumpen-Arbeitsmittel Wasser. In Abb.4.2 wird die Ausrüstung und Schaltung dargestellt, die sich analog zu Abb.3.1 beim Betrieb des Wärmetransformators mit einem niedrigsiedenden Wärmepumpen-Arbeitsmittel nach den Ansprüchen 5, 6 und 19 ergibt, wenn statt der Dampfexpansions-Kraftmaschine 4.1 ein Stirlingmotor 4.8.0 eingesetzt wird.

**Konsequenzen der Wahl des Arbeitsmittels der Niedertemperatur Brüdenverdampfung und -verdichtung für die Schaltung und Funktion des Wärmetransformators.** Wird nach Anspruch 7 für den Antrieb eines BHKWs ein mit 115 bis 125 °C heißgekühlter Motor 1.0 eingesetzt, arbeitet der Niederdruckkessel 2.0 mit dem. Arbeitsmittel Wasser bei 1.7 bis 2.4 bar und ist gegen das Eindringen von Luft oder Öl so gut geschützt, daß der Wärmetauscher 1.7 zum Zylinderkühlkreis des Motors 1.0 entfallen kann, wenn keine besonderen, aus extremen Sicherheitsanforderungen des Betriebes bezüglich der absoluten Öl- und Kontamienationsfreiheit des Heizmediums dagegen sprechen. Der Wärmetransformator ist von der Motorkühlung bis zur Betriebsheizung "offen", energieabsorbierende Temperaturdifferenzen an Wärmeaustauschern zur Medientrennung werden vermieden, die Wasserkreisläufe können unter dem Gesichtpunkt optimaler Wärmerekuperation in erfindungsgemäßer, vorteilhafter Weise entsprechend Abb. 1 angelegt werden.

Die nach Anspruch 11 vorgesehene Einleitung des relativ kalten, frisch aufbereiteten Speisewassers und aller betrieblich anfallenden Kondensate in eine Zulaufleitung vom Niederdruckkessel 2.0 in die Motorkühlkreispumpe 1.8 ist vorteilhaft, weil durch die Unterkühlung des Kühlwasservorlaufes unter die Sättigungstemperatur des Niederdruckkessels 2.0 auch die Überhitzung des Kühlwasserrücklaufes um den gleichen Betrag vermindert und die Brüdenmenge bei der Entspannung und damit die Belastung und der Energiebedarf des Brüdenverdichters 4.0 reduziert werden.

Andererseits ist es vorteilhaft, nach Anspruch 16 mit der Pumpe 3.4 zur Speisung des Economisers 3.3 für den Hochdruckkessel 3.0 überhitztes Kühlwasser aus dem Rücklauf vor dem Reduzierventil 2.2 zu entnehmen, um auch hier möglichst viel Wärme ohne Belastung des Brüdenverdichters 4.0 vom Nieder- in den Hochdruckbereich zu verlagern.

Der Entlastung des Brüdenverdichters 4.0 dient auch der Direktverbrauch von Niedertemperaturwärme durch die aus dem Niederdruckkessel 2.0 gespeisten Heizkreisläufe 2.4 und 2.5 nach Anspruch 12. Dazu sei allerdings unter Hinweis auf die Erläuterungen zu Anspruch 22 einschränkend angemerkt, daß Entlastungen, die nicht dauernd und in einem festen Verhältnis zur jeweiligen Anlagenleistung, sondern temporär und regellos eintreten, nur dann einen wirtschaftlichen Nutzen bewirken, wenn die Brüdenverdichtungsanlage gemäß Anspruch 22 aus getrennten, unabhängig regelbaren Einheiten mit Generator 4.4 und Elektromotor 4.2 besteht.

Muß wegen Nichtverfügbarkeit eines heißgekühlten BHKW-Motors nach Anspruch 4 für den Brüdenverdampfungs- und verdichtungsbereich des Wärmetransformators als Wärmepumpen-Arbeitsmittel eine niedrigersiedende Flüssigkeit gewählt werden, die als Motorkühlmittel unzulässig ist und auch nicht als betriebliches Heizmedium in Frage kommt, muß der Wärmetransformator gemäß Anspruch 6 nach beiden Seiten, also zum Motor und zum Betrieb hin, geschlossen ausgeführt werden, wobei es von den Gefährdungseigenschaften des Wärmepumpen-Arbeitsmittels abhängt (Brennbarkeit, Giftigkeit), ob die dann erforderlichen Medientrennstellen über die Anlage verteilt oder zentral in einem geschützten Bereich angeordnet werden müssen.

Um trotz dieser Sachzwänge die vorteilhaften Schaltungen nach den Ansprüchen 11, 12 und 16 aufrechterhalten und den Verbreitungbereich des niedrigsiedenden Wärmepumpen-Arbeitsmittels auf das Unvermeidliche beschränken zu können, werden nach Anspruch 6 entsprechend Abb. 3.1 der Niederdruckkessel 2.0 als Verdampfer und der Mitteldruckkessel 5.0 als Kondensator eines geschlossenen Wärmepumpensystems mit Wärmeaustauschern zwischen dem niedrigsiedenden Wärmepumpen-Arbeitsmittel und den betrieblichen Kühl- und Heizkreisläufen ausgerüstet und der Expansionsdampf aus der Kraftmaschine 4.1 und der komprimierte Wärmepumpen-Arbeitsmitteldampf aus dem Brüdenverdichter 4.2 getrennt zum Kessel 5.0 geführt und an der Medientrennstelle 4.7 zum Wärmeaustausch gebracht. Das Wärmepumpen-Arbeitsmittelkondensat wird im Sammler 4.6 zwischengespeichert und nach Entspannung im Regelventil 4.5 wieder in den Wärmepumpenverdampfer am oder im Niederdruckkessel 2.0 eingeleitet.

Kann ein Wärmepumpen-Arbeitsmittel eingesetzt werden, dessen Verwendung als Motorkühlmittel unbedenklich ist, wird das Wärmepumpensystem nach Anspruch 5 zum Motorkühlkreis hin offen gestaltet mit dem Vorteil, daß eine Medientrennstelle mit der beim Wärmeaustausch unvermeidlichen Temperaturdifferenz vermieden wird. Die Wasserkreisläufe nach den Ansprüchen 11, 12 und 16 müssen in diesem Fall gemäß Abb. 3.2 direkt oder in Abhängigkeit von den örtlichen Verhältnissen über einen Zwischenbehälter vom betrieblichen Speisewasser- und Kondensatbehälter versorgt werden. Da der Niederdruckkessel 2.0 in dieser Anordnung flüssigkeits- und dampfseitig kein Wasser, sondern nur das voraussichtlich betriebsunverträgliche Wärmepumpen-Arbeitsmittel enthält, muß die Direktversorgung betrieblicher Wärmeverbraucher aus dem Niedertemperaturbereich nach Anspruch 12 zwecks Medientrennung über einen Wärmetauscher durchgeführt werden, der eine zusätzliche Temperaturdifferenz verursacht, die sich aber dadurch kompensiert, daß gegenüber der Ausführung nach Anspruch 6 der Wärmeaustausch des Wärmepumpen-Arbeitmittels gegenüber dem Motorkühlkreis und dem Niederdruckkessel 2.0 entfällt, woraus sich zusätzlich der Vorteil eines höheren Verdampfungsdruckes des Arbeitsmittels mit der Folge eines geringeren Energiebedarfes des Brüdenverdichters 4.0 ergibt.

**Zusammenfassend läßt sich zum Thema ganz- oder halbgeschlossene Wärmepumpe mit einem niedrigsiedenden Arbeitsmittel folgendes feststellen:**Die Ausführung einer solchen Anlage ist auch mit Motorkühltemperaturen unter 100°C technisch möglich, ohne entgegen Anspruch 3 im Niedertemperaturbereich des Wärmetransformators den Umgebungsdruck zu unterschreiten.
1. Tendenziell steigen durch die bei Ausführung nach Anspruch 6 etwas mehr als nach Anspruch 5 erhöhte Differenz zwischen der Motorkühlkreis- und der betrieblichen Heizkreistemperatur auch die Druckdifferenz und der Energiebedarf des Brüdenverdichters 4.0 der Wärmepumpe.
2. Die Tendenz eines steigenden Energiebedarfes des Brüdenverdichters 4.0 wird durch den erhöhten Rückgewinn von Niedertemperaturabwärme aufgrund der kälteren Motorkühlkreise weiter verstärkt. Wenn und soweit es sich dabei um zusätzlich rekuperierte Abwärme handelt, die bei heißgekühlten Motoren verlorengeht, kann man darin einen Vorteil sehen; leider trifft diese Voraussetzung aber nur bedingt und für einen kleinen Anteil zu. Wenn es nämlich erwartungsgemäß gelingt, nach Anspruch 10 auch bei heißgekühlten Motoren die Abwärme des Ölkühlers in die Rekuperation einzubeziehen und nach Anspruch 9 auf das "Wegkühlen" der unter der Kühlkreislauftemperatur anfallenden Ladeluftabwärme zu verzichten, findet sich die bei Niedertemperatur mit Kühlwasser nicht abgeführte Wärme im Abgas wieder, wird im Hochdruckkessel 3.0 oder im Antriebs-Hochtemperatur-Wärmetauscher 4.8.1 des Stirlingmotors 4.8.0 zurückgewonnen und trägt zum Energieangebot des Brüdenverdichterantriebs bei.
3. Konträr zu den Absätzen 2 und 3 läßt sich allerdings zugunsten der kalt gekühlten Motoren und damit den Anlagenkonzepten nach Anspruch 5 und 6 geltend machen, daß sie mit einer viel größeren Auswahl heute verfügbarer Motoren realisierbar sind, als das Heißkühlungskonzept und daß der höhere Energiebedarf der Brüdenverdichtung und das geringere Angebot für den Verdichterantrieb nutzbarer Abgaswärme durch einen zwischen 3 und 5% höheren mechanisch/ elektrischen Wirkungsgrad kalt gekühlter Motoren und deren aufgrund höherer spezifischer Leistung günstigeren Anschaffungspreise ganz oder mindestens weitgehend kompensiert wird. Soweit nämlich durch den besseren Wirkungsgrad bei gleichem Brennstoffdurchsatz mehr Strom erzeugt wird, kann dieser oder ein Teil davon für den erhöhten Energiebedarf der Brüdenverdichtung aufgewendet werden, ohne per Saldo Gesamtwirkungsgrad und Stromkennzahl zu verschlechtem.
4. Als Fazit ist festzustellen, daß die erfindungsgemäßen Konzepte von BHKWs mit Wärmetransformator sowohl in den Versionen für Heißkühlungsmotoren mit Wasser als Wärmepumpen-Arbeitsmittel als auch in den Versionen für kalt gekühlte Motoren mit niedrigsiedenden Wärmepumpen-Arbeitsmitteln vorteilhafte Weiterbildungen der BHKW-Anlagen ohne oder mit Wärmetransformator nach dem Stand der Technik darstellen.

## Patentansprüche

1. Verfahren der Wärmetransformation zur Wandlung der Niedertemperatur-Abwärme aus Kühlkreisläufen von Blockheizkraftwerk(BHKW)-Verbrennungskolbenmotoren in Dampf oder sonstige Heizmedien mit betriebsnotwendiger Temperatur durch Anwendung des Prinzips der Hochtemperatur-Wärmepumpe, nach dem die durch Rückkühlung der Motorkühlkreisläufe auf deren erforderliche Zulauftemperatur anfallende Niedertemperaturabwärme
• auf ein flüssiges Arbeitsmittel übertragen,
• durch Arbeitsmittel-Teilverdampfung von den entstehenden Arbeitsmittelbrüden übernommen,
• durch Verdichtung der Arbeitsmittelbrüden von dem niedrigen, durch die Rückkühltemperatur der Motorkühlkreisläufe bedingten Verdampfungsdruck auf einen höheren, zur Übertragung der Wärme auf das betriebliche Heizmedium erforderlichen, durch den Sättigungsdruck zur Solltemperatur des betrieblichen Heizmediums bedingten Kondensationsdruck gebracht
• und durch Kondensation an das betriebliche Heizmedium weitergegeben wird,
**dadurch gekennzeichnet,**
**daß** die zur Verdichtung der Arbeitsmittelbrüden erforderliche Energie ganz oder teilweise mittels eines den Abgas-Wärmeinhalt des BHKW-Verbrennungskolbenmotors nutzenden mechanischen Verdichters zugeführt wird.

2. Verfahren nach Anspruch 1, **dadurch gekennzeichnet, daß** ein eventuelles Defizit zur Brüdenverdichtung erforderlicher Energie durch Verheizen zusätzlichen Brennstoffes (B) im Motorabgas ausgeglichen wird.

3. Verfahren nach Anspruch 1 oder 2, **dadurch gekennzeichnet, daß** die Niedertemperaturabwärme nur insoweit in die Wärmetransformation einbezogen wird, als sie bei Temperaturen anfällt, auf die die Kühlkreisläufe durch Teilverdampfung eines Arbeitsmittels rückgekühlt werden können, ohne daß es bei den dabei auftretenden Sättigungsdrücken des Arbeitsmittels an einer Stelle oder bei einem Betriebazustand des Wärmetransformators zur Unterschreitung des Umgebungsdruckes kommt.

4. Verfahren nach Anspruch 3, **dadurch gekennzeichnet, daß** für die Motorkühlung und die Wärmepumpe ein Arbeitsmittel wie z.B. Methanol oder Aethanol eingesetzt wird, dessen Siedepunkt so niedrig liegt, daß es beim Einsatz in BHKW-Motoren, deren Kühlkreisläufe konstruktionsbedingt auf niedrige Zulauftemperatur ausgelegt sind, bei der Rückkühlung des Arbeitsmittels durch Teilverdampfung und Brüdenverdichtung an keiner Stelle und in keinem Betriebszustand des Wärmetransformators zur Unterschreitung des Umgebungsdruckes kommt.

5. Verfahren nach Anspruch 4, **dadurch gekennzeichnet, daß** die Medientrennung zwischen dem Arbeitsmittel der Motorkühlung und Wärmepumpe und dem betrieblichen Heizmedium Wasser oder Wasserdampf im Mitteldruckbereich des Wärmetransformators beim Wärmeübergang von den kondensierenden Arbeitsmittelbrüden auf das betriebliche Heizmedium erfolgt.

6. Verfahren nach Anspruch 5, **dadurch gekennzeichnet, daß** als Arbeitsmittel für die Motorkühlung und einen Niederdruckkessel (2.0) Wasser eingesetzt und dessen Rückkühlung durch Wärmeaustausch mit dem Arbeitsmittel der Wärmepumpe an einer zusätzlichen Medientrennung im Bereich des Niederdruckkessels (2.0) des Wärmetransformators erfolgt.

7. Verfahren nach Anspruch 3, **dadurch gekennzeichnet, daß** heißgekühlte BHKW-Motoren eingesetzt werden, für deren Zylinderkühlkreislauf, in dem der überwiegende Abwärmeertrag anfällt, eine so weit über 100°C liegende Zulauftemperatur zulässig ist, daß als Arbeitsmittel der Wärmepumpe Wasser eingesetzt und damit ohne Medientrennung und Unterschreitung des Umgebungsdruckes die gesamte Anlage von den Motorkühlkreisläufen über die Wärmepumpe bis zu den betrieblichen Heizkreisläufen betrieben werden kann.

8. Verfahren nach Anspruch 6 oder 7, **dadurch gekennzeichnet, daß** die Kühlung des in einem Turbolader (1.3) erhitzten Ladeluft/Brennstoffgemisches (A) in eine Vor- und Nachkühlung so aufgeteilt wird, daß der in einem Vorkühler (1.4) ausreichend weit über der Sättigungstemperatur des Arbeitsmittels anfallende Anteil des Abwärmeertrages in die Rückkühlung durch die Wärmetransformation einbezogen werden kann.

9. Verfahren nach einem der Ansprüche 6 bis 8, **dadurch gekennzeichnet, daß** auf die Nachkühlung des im Turbolader (1.3) erhitzten Brennstoff/Luft-Gemisches (A) unter die im Vorkühler (1.4) erreichbare Temperatur verzichtet wird.

10. Verfahren nach einem der Ansprüche 6 bis 9, **dadurch gekennzeichnet, daß** durch die Auswahl des Motoröls und/oder die konstruktive Gestaltung der Schmierölkreisläufe von BHKW-Motoren eine so hohe Zulauftemperatur des Motoröles zulässig wird, daß die darin anfallende Abwärme vollständig in die Rückgewinnung durch den Wärmetransformator einbezogen werden kann.

11. Verfahren nach einem der Ansprüche 6 bis 10, **dadurch gekennzeichnet, daß** frisches Kesselspeisewasser und Heizdampfkondensat (D) in eine Zulaufleitung vom Niederdruckkessel (2.0) zu einer Kühlwasserpumpe (1.8) eingespeist werden.

12. Verfahren nach einem der Ansprüche 6 bis 11, **dadurch gekennzeichnet, daß** betriebliche Wärmeverbraucher, die mit Arbeitsmittelflüssigkeit oder -dampf aus dem Niederdruckkessel (2.0) ausreichend beheizt werden können, direkt damit versorgt werden.

13. Verfahren nach einem der Ansprüche 6 bis 12, **dadurch gekennzeichnet, daß** sämtliche Kühlkreisläufe seitens des Wärmepumpen-Arbeitsmittels parallel geschaltet sind.

14. Verfahren nach einem der Ansprüche 6 bis 13, **dadurch gekennzeichnet, daß** die zur Brüdenverdichtung erforderliche Energie durch Expansion des aus der Abgaswärme des BHKW-Motors mit höherem als dem zur Beheizung des Betriebes erforderlichen Druck in einem Hochdruckkessel (3.0) erzeugten Dampfes auf den Sättigungsdruck zur Temperatur des betrieblichen Heizmediums bereitgestellt wird.

15. Verfahren nach einem der Ansprüche 6 bis 14, **dadurch gekennzeichnet, daß** der Hochdruckdampf überhitzt wird, so daß die Expansion mit möglichst hoher Arbeitsleistung erfolgt.

16. Verfahren nach einem der Ansprüche 6 bis 15, **dadurch gekennzeichnet, daß** das Speisewasser des mit Motorabgas beheizten Hockdruckkessels (3.0) aus einer Rücklaufleitung von den Motorkühlkreisläufen zu dem Niederdruckkessel (2.0) noch vor einem Druckhalteventil (2.2) entnommen und durch die Abgaskühlung in einem Economiser (3.3) vorgewärmt wird.

17. Vorrichtung zur Durchführung des Verfahrens der Wärmetransformation zur Wandlung der Niedertemperatur-Abwärme aus Kühlkreisläufen von Blockheizkraftwerk(BHKW)-Verbrennungskolbenmotoren in Dampf oder sonstige Heizmedien mit betriebsnotwendiger Temperatur durch Anwendung des Prinzips der Hochtemperatur-Wärmepumpe und zur Nutzung des aus der Energie des Abgases und bei Bedarf in einem Brenner zusätzlich verheizten Brennstoffes, nach dem die durch Rückkühlung der Motorkühlkreisläufe auf deren erforderliche Zulauftemperatur anfallende Niedertemperaturabwärme auf ein flüssiges Arbeitsmittel übertragen, durch Arbeitsmittel-Teilverdampfung von den entstehenden Arbeitsmittelbrüden übernommen, durch Verdichtung der Arbeitsmittelbrüden von dem niedrigen, durch die Rückkühltemperatur der Motorkühlkreisläufe bedingten Verdampfungsdruck auf einen höheren, zur Übertragung der Wärme auf das betriebliche Heizmedium erforderlichen, durch den Sättigungsdruck zur Solltemperatur des betrieblichen Heizmediums bedingten Kondensationsdruck gebracht und durch Kondensation an das betriebliche Heizmedium weitergegeben wird, und nach dem die Energie des Abgases zur Verdichtung der Arbeitsmittelbrüden genutzt wird, mit einem Verbrennungs-Kolbenmotor (1.0) mit einem angekoppelten Elektrogenerator (1.1), mit einem Wärmetransformator, bestehend aus Motorkühlkreisläufen für Ladeluft und/oder Gemisch (1.4, 1.5), Motoröl (1.6) und Zylinder (1.7), die ihre Wärme über eine Arbeitsflüssigkeit in einen Niederdruckkessel (2.0) abführen, weiterhin bestehend aus einem Treibdampf-Hochdruckkessel mit einem Hochdruckkessel (3.0), einem diesem abgasseitig vorgeschalteten Überhitzer (3.1) und einem nachgeschalteten Speisewasservorwärmer (3.3) und mit einem Mitteldruck-Heizkessel (5.0), der mit Arbeitsmittelbrüden aus dem Niederdruckkessel (2.0) beheizt wird, die eine Verdichtung über einen mit dem überhitzten Treibdampf aus dem Überhitzer (3.1) betriebenen Brüdenverdichter (4.0) erfahren, **dadurch gekennzeichnet, daß** ein Dampfstrahlverdichter (4.0.1) eingesetzt wird, dessen expandierter Treibdampf zusammen mit den verdichteten Brüden zur Weiterverwendung für die Heizung des Betriebes in den Heizdampf-Mitteldruckkessel (5.0) des Wärmetransformators geleitet wird

18. Vorrichtung zur Durchführung des Verfahrens nach einem der Ansprüche 1 bis 3 oder 7 bis 17, zur Nutzung des aus der Energie des Motorabgases und bei Bedarf in einem Brenner (3.2) zusätzlich verheizten Brennstoffes (B) im Hochdruckkessel (3.0) erzeugten und in einem Überhitzer (3.1) überhitzten Treibdampfes für die Brüdenverdichtung, **dadurch gekennzeichnet, daß** die Brüdenverdichtung mit einem mechanischen Kompressor (4.0) erfolgt, der von einer Dampfexpansions-Kraftmaschine (4.1) angetrieben wird, deren expandierter Treibdampf zusammen mit den verdichteten Brüden zur Weiterverwendung für die Heizung des Betriebes in einen Heizdampf-Mitteldruckkessel (5.0) des Wärmetransformators geleitet wird.

19. Vorrichtung zur Durchführung des Verfahrens nach einem der Ansprüche 1 bis 6 oder 9 bis 16, zur Nutzung des aus der Energie des Motorabgases und bei Bedarf in einem Brenner (3.2) zusätzlich verheizten Brennstoffes (B) im Hochdruckkessel (3.0) erzeugten und im Überhitzer (3.1) überhitzten Treibdampfes für die Brüdenverdichtung, **dadurch gekennzeichnet, daß** die Verdichtung des für die Betriebsheizung unverträglichen Arbeitsmittelbrüdens mit einem mechanischen Kompressor (4.0) erfolgt, der von einer Dampfexpansions-Kraftmaschine (4.1) angetrieben wird, deren expandierter Treibdampf getrennt von den verdichteten Arbeitsmittel-Brüden zur Weiterverwendung für die Heizung des Betriebes in den Hochdruck kessel (3.0) des Wärmetransformators geleitet wird, während die verdichteten Arbeitsmittel-Brüden ihre Energie durch Kondensation an einem Wärmeaustauscher (4.7) an den Wasserinhalt des Heizdampf-Mitteldruckkessels (5.0) des Wärmetransformators abgeben und verflüssigt in den Niederdruckkessel (2.0) zurückgeleitet werden.

20. Vorrichtung nach einem der Ansprüche 18 oder 19, **dadurch gekennzeichnet, daß** ein stark vereinfachter, durch Dampfexpansion hubzahlgeregelt angetriebener Brüdenverdichter (4.0) eingesetzt wird, der unter Verzicht auf eine Kurbelwelle nur noch aus direkt über gemeinsame Kolbenstangen gekoppelten Expansions- und Kompressions-Kolben und einer Ein- und Auslaßsteuerung für den Antriebsdampf und die Brüden besteht.

21. Vorrichtung nach einem der Ansprüche 18 oder 19, **dadurch gekennzeichnet, daß** bei einem Mangel an Abgasenergie anstelle der Erzeugung zusätzlichen Treibdampfes durch den Brenner (3.2) für die Dampfexpansions-Kraftmaschine (4.1) ein elektrischer oder ein hydraulisch oder mechanisch mit dem BHKW-Motor (1.0) gekoppelter Zusatzantrieb (4.2) des Brüdenverdichters (4.0) vorgesehen wird.

22. Vorrichtung nach einem der Ansprüche 18 oder 19, **dadurch gekennzeichnet, daß** bei einem Mangel an Abgasenergie anstelle oder zuzüglich der Erzeugung zusätzlichen Treibdampfes durch den Brenner (3.2) der mit einem Elektromotor (4.2) ausgerüstete Brüdenverdichter (4.0) mechanisch von der Dampfexpansions-Kraftmaschine (4.1) entkoppelt wird, die mit einem Elektrogenerator (4.4) unter vollständigem Einsatz des erzeugten Hochdruckdampfes für den Antrieb des hinsichtlich Leistung und Drehzahl unabhängig geregelten Brüdenverdichters (4.0) Strom erzeugt, dessen temporärer Überschuß durch ein Lastmanagement (4.5) parallel zur Leistung eines BHKW-Generators (1.1) ins Netz eingespeist wird.

23. Vorrichtung nach einem der Ansprüche 21 oder 22, **dadurch gekennzeichnet, daß** der Zusatzantrieb (4.2) des Brüdenverdichters (4.0) in einem Verbrennungsmotor besteht, dessen Abwärme vom Wämetransformator mit der des BHKW-Motors (1.0) verarbeitet wird.

24. Vorrichtung zur Durchführung des Verfahrens nach einem oder mehreren der Ansprüche 1 bis 13, **dadurch gekennzeichnet, daß** unter direkter Nutzung der Abgasenergie zum Antrieb des Brüdenverdichters (4.0) ein Stirlingmotor (4.8.0) eingesetzt wird, dessen Abwärme vom Wärmetransformator mit der des BHKW-Motors (1.0) verarbeitet wird.

## Claims

1. A process of heat transformation to convert the low-temperature waste heat from cooling circuits of block-type thermal power station (BTPS) reciprocating-piston combustion engines into steam or other heating media of a temperature required for operation by adopting the principle of the high temperature heat pump according to which the low-temperature heat produced by cooling back the engine cooling circuits to their required inflow temperature
• is transferred to a liquid working medium,
• is absorbed by the resultant working media vapours by working media partial evaporation,
• is brought, by compressing the working medium vapours from the low evaporation pressure conditioned by the required inflow temperature of the engine cooling circuits, to a higher condensation pressure as is required for the transmission of heat to the in-plant heating medium and is conditioned by the saturation pressure for the desired temperature of the in-plant heating medium,
• and is transferred by condensation to the in-plant heating medium,
• **characterized in that** the energy required for mechanical vapour compression is gained fully or in part from the exhaust gas heat content of the BTPS reciprocating-piston combustion engine.

2. The process according to claim 1, **characterized in that** a possible deficiency of the energy required for vapour compression is balanced out by firing additional fuel (B) in the engine exhaust gas.

3. The process according to claim 1 or 2, **characterized in that** the low temperature waste heat is incorporated into heat transformation only in as far as it is produced at temperatures to which the cooling circuits may be cooled back by partial evaporation of a working medium without any drop below the ambient pressure in any point or at any operating condition of the heat transformer at the saturation pressures of the working medium which thereby occur.

4. The process according to claim 3, **characterized in that** a working medium such as methanol or ethanol is employed in the engine cooling circuits and the heat pump, the boiling point of which medium is so low that when used in BTPS engines the cooling circuits of which are designed for a low inflow temperature due to construction no drop below the ambient pressure will occur in any point or at any operating condition of the heat transformer in cooling back the working medium by partial evaporation and vapour compression.

5. The process according to claim 4, **characterized in that** media separation between the working medium for engine cooling and the heat pump and the in-plant heating medium, which is water or steam, is performed in the medium-pressure range of the heat transformer during the heat transfer from the condensing vapours of the working medium to the in-plant heating medium.

6. The process according to claim 5, **characterized in that** water is used as a working medium for engine cooling and a low-pressure boiler (2.9) and the cooling back of which medium is effected by heat exchange with the working medium of the heat pump at an additional media Separation point in the area of the low-pressure boiler (2.0) of the heat transformer.

7. The process according to claim 3, **characterized in that** hot-cooled BTPS engines are employed for the cylinder cooling circuit of which where the preponderant output of waste heat is produced an inflow temperature is admissible which is so far above 100°C that water may be used as a working medium of the heat pump and may be employed to operate the whole plant from the engine cooling circuits via the heat pump to the in-plant heating circuits without any media separation and without any pressure drop below its ambient level.

8. The process according to claim 6 or 7, **characterized in that** the cooling of the charging air/fuel mix (A) heated in a turbo-supercharger (1.3) is divided into a first and a second cooling circuit in such a way that the proportion of the waste thermal output which is produced sufficiently far above the saturation temperature of the working medium in a first cooler (1.4) may be incorporated into the cooling back process by heat transformation.

9. The process according to any one of claims 6 to 8, **characterized in that** cooling back of the air/fuel mix (A) heated in the turbo-supercharger (1.3) below the temperature achievable in the first cooling circuit (1.4) is dispensed with.

10. The process according to any one of claims 6 to 9, **characterized in that** the choice of the engine oil and/or the construction type of the lubricating-oil circuits of BTPS engines makes admissible an engine oil inflow temperature which is high enough to enable the waste heat produced therein to be fully incorporated in heat recovery by the heat transformer.

11. The process according to any one of claims 6 to 10, **characterized in that** fresh boiler feed water and heating steam condense (D) are fed to a pipeline from the low-pressure boiler (2.0) to a cooling-water pump (1.8).

12. The process according to any one of claims 6 to 11, **characterized in that** in plant heat users which may be sufficiently heated by working medium liquid or steam from the low-pressure boiler (2.0) are directly supplied therewith.

13. The process according to any one of claims 6 to 12, **characterized in that** all of the cooling circuits are connected in parallel with respect to the heat pump working medium.

14. The process according to any one of claims 6 to 13, **characterized in that** the energy required for vapour compression is provided by an expansion of the steam produced in a high pressure waste-heat boiler (3.0) from the exhaust gas heat of the BTPS engine at a pressure higher than the one necessary for heating the plant down to the saturation pressure for the temperature of the in-plant heating medium.

15. The process according to any one of claims 6 to 14, **characterized in that** the high-pressure steam is superheated so that its expansion is performed at a working efficiency which is as high as possible.

16. The process according to any one of claims 6 to 15, **characterized in that** the feed water of the high pressure waste heat boiler (3.0) fired by engine exhaust gas is withdrawn from a return line from the engine cooling circuits to the low-pressure boiler (2.0) still before reaching a pressure maintaining valve (2.2) and is preheated by exhaust gas cooling in an economiser (3.3).

17. A device for realising the process according to any one of claims 1 to 3 or 7 to 16 to use for vapour compression the motive steam, generated in the high-pressure boiler (3.0) and superheated in a superheater (3.1) from the energy of the exhaust gas and, if required, from an extra fuel (B) fired in a burner (3.2), **characterized in that** a steam jet compressor (4.0.1) is employed the expanded motive steam of which, along with the compressed vapours, is led to a heating-steam medium-pressure boiler (5.0) of the heat transformer (Fig. 2.1) to undergo further use in in-plant heating (Fig. 2.1).

18. The device for realising the process of heat transformation according to any one of claims 1 to 3 or 7 to 16 to use for vapour compression the motive steam, generated in the high-pressure boiler (3.0) and superheated in a superheater (3.1) from the energy of the exhaust gas and, if required, from an extra fuel (B) fired in a burner (3.2), **characterized in that** vapour compression is performed by means of a mechanical compressor (4.0) which is powered by a steam expansion prime mover (4.1) the expanded motive steam of which, along with the compressed vapours, is led to a heating-steam medium-pressure boiler (5.0) of the heat transformer to undergo further use in in-plant heating (Fig. 1, Figs. 2.1 to 2.3).

19. The device for realising the process of heat transformation according to any one of claims 1 to 3 or 7 to 16 to use for vapour compression the motive steam, generated in the high-pressure boiler (3.0) and superheated in a superheater (3.1) from the energy of the exhaust gas and, if required, from an extra fuel (B) fired in a burner (3.2), **characterized in that** the compression of a working-medium vapour incompatible with in-plant heating is performed by means of a mechanical compressor (4.0) which is powered by a steam expansion prime mover (4.1) the expanded motive steam of which is led, separated from the compressed vapours, to the high-pressure boiler (3.0) of the heat transformer to undergo further use in in-plant heating while the compressed working-medium vapours dissipate their energy by condensation to a heat exchanger (4.7) to the water content of the heating-steam mediumpressure boiler (5.0) of the heat transformer and are returned to the lowpressure boiler (2.0) in a liquefied condition (Fig. 3.1; Fig. 3.2).

20. The device according to any one of claims 18 or 19, **characterized in that** a strongly simplified vapour compressor (4.0) driven by steam expansion at a controlled number of strokes is used which, dispensing with a crankshaft, remains only composed of expansion and compression pistons directly coupled via common piston rods, and an inlet and outlet control for the driving steam and the vapours.

21. The device according to any one of claims 18 or 19, **characterized in that** if exhaust gas energy is lacking an extra drive (4.2) which is electric or is coupled hydraulically or mechanically to the BTPS engine (1.0) is provided in lieu of generating additional motive steam by means of the burner (3.2) for the steam expansion prime mover (4.1) (Fig. 3.1; Fig. 3.2).

22. The device according to any one of claims 18 or 19, **characterized in that** if exhaust gas energy is lacking, in lieu of or in addition to generating additional motive steam by means of the burner (3.2), the vapour compressor (4.0) equipped with the electric motor (4.2) is uncoupled mechanically from the steam expansion prime mover (4.1) which is equipped with an electric generator (4.4) and utilises fully the produced high-pressure steam to generate electric power the major part of which is needed for driving the vapour compressor (4.0) independently controlled with regard to the output and the number of revolutions and the temporary surplus of which is fed to the mains by a load management (4.5) in parallel with the output of a BTPS generator (1.1) (Fig. 2.3).

23. The device according to any one of claims 21 or 22, **characterized in that** the extra drive (4.2) of the vapour compressor (4.0) consists in a combustion motor the waste heat of which is processed by the heat transformer with that of the BTPS engine (1.0).

24. The device for realising the process according to one or more of claims 1 to 13, **characterized in that,** while directly using the exhaust gas energy to drive the vapour compressor (4.0) a Stirling engine (4.8.0) is employed the waste heat of which is processed by the heat transformer with that of the BTPS engine (1.0). (Fig. 4.1; Fig. 4.2).

## Revendications

1. Procédé de transformation de chaleur destiné à transformer la chaleur perdue partiellement chaude et partiellement froide des circuits de refroidissement des groupes de couplage de chaleur-force en vapeur ou autres milieux chauds à la température de service requise par application du principe de la pompe à chaleur à haute température; selon lequel procédé la chaleur perdue partiellement chaude et partiellement froide est récupérée de la température d'alimentation requise en refroidissant les circuits de refroidissement de moteur et laquelle chaleur perdue partiellement chaude et partiellement froide:
• est transférée à un agent de travail liquide,
• est récupérée par évaporation partielle des mélanges air/vapeur des agents de travail créés,
• est portée grâce à une condensation des mélanges air/vapeur des agents de travail, d'un niveau bas de la pression d'évaporation dépendant de la température de refroidissement des circuits de refroidissement de moteur vers une pression de saturation plus grande nécessaire au transfert de la chaleur vers le milieu chaud de service et dépendant de la pression de saturation à la température de consigne du milieu chaud de service,
• et est transférée grâce à la condensation au milieu chaud de service,
• **caractérisé en ce que**
• l'énergie nécessaire pour la compression des agents de travail est transférée entièrement ou partiellement au moyen d'un compresseur mécanique utilisant le contenu de chaleur des gaz d'échappement du moteur à piston et à combustion interne d'un groupe de couplage chaleur-force.

2. Procédé selon la revendication 1, **caractérisé en ce qu**'un déficit éventuel nécessaire pour la compression des mélanges air/vapeur est compensé en brûlant un combustible supplémentaire (B) dans le gaz d'échappement du moteur.

3. Procédé selon la revendication 1 ou 2, **caractérisé en ce que** la chaleur perdue partiellement chaude et partiellement froide est incluse dans la transformation de chaleur uniquement si elle survient à des niveaux de températures permettant aux circuits de refroidissement d'être refroidis par évaporation partielle d'un agent de travail sans dépassement de la pression environnante par le bas avec des pressions d'évaporation de l'agent de travail existant à cet endroit ou avec un certain état de fonctionnement du transformateur de chaleur.

4. Procédé selon la revendication 3 **caractérisé en ce qu**'un agent de travail comme le méthanol ou l'éthanol est employé pour refroidir le moteur et la pompe à chaleur, dont le point de bouillonnement est si bas de sorte que la pression environnante ne se trouve pas dépassée par le bas à aucun endroit et sans aucun état de fonctionnement du transformateur de chaleur au cours du refroidissement de l'agent de travail des moteurs des groupes de couplage chaleur-force dont les circuits de refroidissement sont par leur construction adaptés à des températures d'alimentation basses.

5. Procédé selon la revendication 4, **caractérisé en ce que** la séparation des agents entre l'agent de travail destiné à refroidir le moteur et la pompe à chaleur et l'agent chaud de service d'eau ou de vapeur est effectuée dans une zone de pression moyenne du transformateur de chaleur au cours du passage de chaleur des agents de travail condenseurs vers le milieu chaud de service des mélanges air/vapeur.

6. Procédé selon la revendication 5, **caractérisé en ce que** de l'eau est utilisée comme agent de travail pour refroidir le moteur et pour la chaudière basse pression (2.0) lequel agent de travail est refroidi par un échange de chaleur avec l'agent de travail de la pompe à chaleur à un endroit d'une séparation supplémentaire des agents dans la zone de la chaudière basse pression (2.0) du transformateur de chaleur.

7. Procédé selon la revendication 3, **caractérisé en ce que** des moteurs chauds refroidis de groupes de couplage chaleur-force sont utilisés pour le circuit de refroidissement pour le cylindre dans lequel on trouve la plus grande partie du rendement de la chaleur perdue et desquels on admet une température d'alimentation largement supérieure à 100°C de manière à utiliser de l'eau comme agent de travail de la pompe à chaleur et **caractérisé en ce que** toute l'installation peut ainsi être utilisée sans séparation des agents et sans dépassement par le bas de la pression environnante de la pompe à chaleur jusqu'aux circuits de chauffage de service.

8. Procédé selon la revendication 6 ou 7, **caractérisé en ce que** le refroidissement du mélange air de charge/combustible (A) chauffé dans un turbocompresseur (1.3) est séparé par un refroidissement premier et secondaire de manière que la part du rendement de la chaleur perdue existant dans le refroidisseur premier (1.4) avec une température largement supérieure à la température de saturation de l'agent de travail est incluse dans le refroidissement obtenu par la transformation de la chaleur.

9. Procédé selon une des revendications 6 à 8, **caractérisé en ce que** l'on abandonne l'idée de refroidir le mélange combustible/air (A) chauffé dans le turbocompresseur (1.3) en dessous du niveau de température qu'il est possible d'atteindre dans le refroidisseur premier (1.4)

10. Procédé selon une des revendications 6 à 9, **caractérisé en ce que** le choix de l'huile moteur et/ou de l'aménagement constructif des circuits d'huile lubrifiant du moteur du groupe de couplage chaleur-force permet d'obtenir une température d'alimentation si élevée de l'huile moteur que la chaleur perdue existante peut être entièrement incluse dans le recyclage par le transformateur de chaleur.

11. Procédé selon une des revendications 6 à 10, **caractérisé en ce que** de l'eau fraîche provenant de la chaudière et du condensat de vapeur (D) est introduite dans un conduit d'alimentation de la chaudière basse pression (2.0) vers une pompe d'eau de refroidissement (1.8).

12. Procédé selon une des revendications 6 à 11, **caractérisé en ce que** des dispositifs utilisateur de chaleur de service, suffisamment chauffés par le liquide ou par de la vapeur d'agent de travail de la chaudière basse pression (2.0), sont directement alimentés.

13. Procédé selon une des revendications 6 à 12, **caractérisé en ce que** tous les circuits de refroidissement sont connectés en parallèle du côté de l'agent de travail de la pompe à chaleur.

14. Procédé selon une des revendications 6 à 13, **caractérisé en ce que** l'énergie nécessaire pour la compression des mélanges air/vapeur est mise à disposition par expansion de la vapeur créée à partir de la chaleur des gaz d'échappement du moteur du groupe de couplage chaleur-force avec une pression supérieure à la pression nécessaire au chauffage de service dans une chaudière haute pression de chaleur perdue (3.0) a la pression de saturation avec la température de consigne du milieu chaud de service.

15. Procédé selon une des revendications 6 à 14, **caractérisé en ce que** la vapeur haute pression est surchauffée de sorte que l'expansion se produise avec une puissance de travail aussi grande que possible.

16. Procédé selon une des revendications 6 à 15, **caractérisé en ce que** l'eau d'alimentation de la chaudière haute pression de chaleur perdue chauffée par des gaz d'échappement des moteurs est récupérée en amont de la valve de maintien de pression (2.2) d'un conduit de retour entre les circuits de refroidissement du moteur et la chaudière basse pression (2.0) et préchauffée dans un économiseur (3.3) grâce au refroidissement des gaz d'échappement.

17. Dispositif pour l'application du procédé de transformation de chaleur, destiné à transformer la chaleur perdue partiellement chaude et partiellement froide des circuits de refroidissement des groupes de couplage de chaleur-force en vapeur ou autres milieux chauds au niveau de la température de service requise par application du principe de la pompe à chaleur à haute température; selon lequel procédé la chaleur perdue partiellement chaude et partiellement froide est récupérée de la température d'alimentation requise, en refroidissant les circuits de refroidissement de moteur et laquelle chaleur perdue partiellement chaude et partiellement froide est transférée à un agent de travail liquide, est récupérée par évaporation partielle des mélanges air/vapeur de l'agent de travail créés, est portée grâce à une compression des mélanges air/vapeur des agents de travail, d'un niveau bas de la pression d'évaporation dépendant de la température de refroidissement des circuits de refroidissement de moteur vers une pression de saturation plus grande, nécessaire au transfert de la chaleur vers le milieu chaud de service et dépendant de la pression de saturation à la température de consigne de l'agent chauffant de service, et est transférée grâce à la condensation au milieu chaud de service, selon le procédé de transformation de chaleur, l'énergie du gaz d'échappement est utilisée pour la compression des buées des agents de travail, ledit dispositif étant pourvu d'un moteur de mélanges air/vapeur à piston et à combustion interne (1.0) doté d'un générateur d'électricité accouplé (1.1), d'un transformateur de chaleur composé de circuits de refroidissement de moteurs pour l'air de charge et/ou un mélange (1.4, 1.5), d'huile moteur (1.6) et d'un cylindre (1.7) qui transfèrent leur chaleur au moyen d'un liquide de travail dans une chaudière basse pression (2.0), ledit dispositif étant pourvu en outre d'une chaudière haute pression à vapeur de propulsion dotée d'un générateur de vapeur de chaleur perdue haute pression (3.0), avec un dispositif de sur-chauffage (3.1) installé en amont du côté du gaz d'échappement et un dispositif de préchauffage d'eau d'alimentation installé en aval et muni d'une chaudière à pression moyenne (5.0) alimentée à partir de la chaudière basse pression (2.0) en mélanges air/vapeur d'agents de travail comprimé au moyen d'un compresseur de mélanges air/vapeur (4.0) alimenté par la vapeur de propulsion surchauffée du dispositif de sur-chauffage (3.1) , **caractérisé en ce qu'**un compresseur de jets de vapeur (4.0.1) est utilisé dont la vapeur de propulsion expansé est introduit ensemble avec les mélanges air/vapeur condensés pour être utilisé ultérieurement pour le chauffage de service dans une chaudière à pression moyenne de vapeur de chauffage (5.0).

18. Dispositif pour l'application du procédé selon une des revendications 1 à 6 ou 9 à 16, pour l'utilisation d'une vapeur de propulsion produit à partir de l'énergie des gaz d'échappement de moteur et si besoin brûlé du combustible (B) en plus dans un brûleur (3.2) dans la chaudière de chaleur perdue haute pression (3.0) et surchauffée dans le dispositif de sur-chauffage (3.1) pour la compression des mélanges air/vapeur, **caractérisé en ce que** la compression des buées est effectuée avec un compresseur mécanique (4.0) entraîné par une machine à expansion de vapeur (4.1), dont la vapeur de propulsion expansée est conduit ensemble avec les mélanges air/vapeur comprimées afin d'être utilisé ultérieurement pour le chauffage de service dans une chaudière à pression moyenne de vapeur de chauffage (5.0) du transformateur de chaleur.

19. Dispositif pour l'application du procédé selon une des revendications 1 à 6 ou 9 à 16, pour l'utilisation d'une vapeur de propulsion produit à partir de l'énergie des gaz d'échappement de moteur et si besoin brûlé du combustible (B) en plus dans un brûleur (3.2) dans la chaudière de chaleur perdue haute pression (3.0) et surchauffée dans le dispositif de sur chauffage (3.1) pour la compression des mélanges air/vapeur, **caractérisé en ce que** la compression des mélanges air/vapeur des agents de travail non compatible avec le chauffage de service est effectuée avec un compresseur mécanique (4.0) entraîné par une machine à expansion de vapeur (4.1), dont la vapeur de propulsion expansée est conduite de façon séparée des mélanges air/vapeur des agents de travail comprimées afin d'être utilisée ultérieurement pour le chauffage de service dans une chaudière haute pression (3.0) du transformateur de chaleur pendant que les mélanges air/vapeur des agents de travail comprimées transmettent leurs énergie par condensation sur un échangeur de chaleur (4.7) au volume d'eau de la chaudière à pression moyenne de vapeur de chauffage (5.0) du transformateur de chaleur et est reconduit liquéfié dans la chaudière basse pression (2.0).

20. Dispositif selon une des revendications 18 ou 19, **caractérisé en ce qu**'on emploie un compresseur de mélanges air/vapeur (4.0) très simplifié, entraîné par l'expansion de la vapeur, à réglage de course et constitué sans vilebrequin, seulement d'un piston d'expansion et d'un de compression couplé au moyen d'un arbre de piston commun et constitué d'une commande d'entrée et de sortie pour la vapeur d'entraînement et les mélanges air/vapeur.

21. Dispositif selon une des revendications 18 ou 19, **caractérisé en ce qu'en** cas de manque d'énergie de gaz d'échappement on prévoit à la place d'une production supplémentaire de vapeur de propulsion par le brûleur (3.2) pour la machine d'expansion de vapeur (4.1), un entraînement supplémentaire (4.2) du compresseur de mélanges air/vapeur (4.0) électrique ou hydraulique ou mécaniquement couplé avec le moteur (1.0) du groupe de couplage chaleur-force.

22. Dispositif selon une des revendications 18 ou 19, **caractérisé en ce qu'**en cas d'un manque d'énergie de gaz d'échappement, on prévoit à la place ou en addition d'une production supplémentaire de vapeur de propulsion par le brûleur (3.2) que le compresseur de mélanges air/vapeur (4.0) équipé d'un moteur électrique (4.2) soit mécaniquement découplé de la machine d'expansion de vapeur (4.1), qui produit, en utilisant complètement la vapeur haute pression, du courant électrique avec un générateur d'électricité (4.4) pour l'entraînement du compresseur de mélanges air/vapeur (4.0) à commande indépendante en puissance et en vitesse de rotation; le surplus temporaire du courant électrique est introduit au moyen d'une gestion de charge (4.5) dans le réseau ensemble avec la puissance d'un générateur de groupe de couplage chaleur-force. (1.1)

23. Dispositif selon une des revendications 21 ou 22, **caractérisé en ce que** l'entraînement supplémentaire (4.2) du compresseur de mélanges air/vapeur (4.0) est constitué d'un moteur à combustion dont la chaleur perdue est utilisée par le transformateur de chaleur avec celle du moteur du groupe de couplage chaleur-force. (1.0)

24. Dispositif pour l'application du procédé selon une ou plusieurs des revendication 1 à 13, **caractérisé en ce qu**'on utilise un moteur Stirling (4.8.0) pour entraîner le condenseur de mélanges air/vapeur (4.0) en utilisant directement l'énergie des gaz d'échappement; la chaleur perdue du moteur Stirling étant utilisée par le transformateur de chaleur avec celle du moteur du groupe (1.0) de couplage chaleur-force.
